# EUROPEAN PATENT SPECIFICATION

(11) **EP 2 141 613 B1**
(45) Date of publication and mention of the grant of the patent: **31.07.2019**
(21) Application number: 08011825.0
(22) Date of filing: 30.06.2008
(51) Int. Cl.: G06F 16/00

(54) **Method of writing and reading data and data processing apparatus**
Verfahren zum Schreiben und Lesen von Daten und Datenverarbeitungsvorrichtung
Procédé d'écriture et de lecture de données et appareil de traitement de données

(43) Date of publication of application: 06.01.2010
(73) Proprietor: Harman Becker Automotive Systems GmbH, 76307 Karlsbad (DE)
(72) Inventor: Richert, Arwed, 72768 Reutlingen (DE)
(74) Representative: Bertsch, Florian Oliver

(56) References cited:
- WO-A-2008/075814
- US-A1- 2007 162 429
- US-A1- 2008 154 994

## Description

This invention relates to methods of writing data into a data archive and of reading data from a data archive and to data processing apparatuses. In particular, the invention relates to such methods and apparatuses for use in human-machine interfaces.

### Related Art

An increasing number of electronic devices in various fields of applications provides optical, acoustic, tactile or other output to a user via a human-machine interface, such as via a display or loudspeaker. As such electronic devices are frequently distributed in different geographical regions, for example in different countries, or to a large number of customers, it is desirable that such electronic devices are readily configurable to support different settings associated with different geographical regions or different varieties of customers. For example, it may be desirable to support different language settings or different graphical output variants for a given resource, such as a text string, that is output to a user of navigation device installed onboard a vehicle.

While different settings or variants, such as different language settings, different daytime settings, or different data output settings, for data resources may be supported by implementing the different variants in the source code of an application that requires access to the respective data resources, such an implementation may have the drawback that it may be difficult to modify at a later stage in order to accommodate additional variants. For example, for an application source code that supports two languages, such as English and German, it may be difficult to include support for an additional language, such as Chinese, at a later stage. Adding all data that are anticipated to be required for any setting in the source code is usually not a feasible solution in view of the associated storage space requirements.

### Summary

Therefore, there is a need in the art for improved methods and apparatuses for writing data into and reading data from data archives. In particular, there is a need in the art for such a method and apparatus that allows data archives having moderate storage space requirements to be used, while supporting that different variants for a given data resource can be found easily.
According to the invention, this need is addressed by a method and apparatus as defined in the independent claims. The dependent claims define preferred or advantageous embodiments of the invention.

According to one aspect of the invention, a method of writing data to a data archive is provided which comprises storing the data in a first portion of the data archive, generating an entry in a second portion of the data archive, determining whether the data correspond to one of a plurality of variants for a given data resource, and generating a further entry in the second portion based on the determining. The entry is generated so as to be indicative of a storage location of the data in the first portion and may include, e.g., a numerical value indicating an offset of the data in the first portion. The further entry is generated so as to comprise an identifier for the entry, e.g., a numerical identifier that uniquely identifies the entry in the second portion.

US 2008/0154994 A1, which serves as basis for the preamble of the independent claims, describes a database structure in which index data is maintained to facilitate searching the database. A first index of current data objects and a second index of aged data objects are maintained. The index may be stored in a hierarchical manner, i.e., portions of the index may be located on hard disk, in cache memory, in main memory and the like.

In this aspect, the data archive has a first portion in which data corresponding to the data resource may be stored, and a second portion storing information on how to access the data stored in the first portion. As the further entry, which includes the identifier for the entry in the second portion, are generated in the second portion different, a plurality of variants for the data resource are stored in the data archive, the further entry serving as a branching point to the entries that include information on the storage locations for the data corresponding to the different variants.

Determining whether the data correspond to one of the plurality of variants for the given data resource may be made based on a user input.

The further entry is generated only when it is determined that the data correspond to one of the plurality of variants for the given data resource. When there is a plurality of variants for the given data resource, data corresponding to each one of the variants are stored in the first portion, and an entry indicative of a storage location of the data for the respective variant is stored in the second portion of the data archive. The further entry is generated so that it includes an identifier for each one of the plurality of entries. In this manner, a request for a data resource can be directed to either one of the plurality of entries and thus, ultimately, to either one of the plurality of entries at the further entry, depending on a desired variant.

The generation of a further entry may be recursively repeated when not only one, but several pluralities of variants are supported. For example, the entry generated in the second portion may be indicative for the storage location of the data corresponding to a specific first variant (e.g., a specific language setting) of a plurality of first variants and to a specific second variant (e.g., a specific daytime setting) of a plurality of second variants, and a further entry may be generated for every variant of the plurality of second variant so as to comprise an identifier for each one of the entries corresponding to a specific second variant and the plural first variants. I.e., for every supported second variant (e.g., daytime setting), a further entry may be generated. An additional further entry may be generated which comprises an identifier for each one of the further entries. In this manner, several pluralities of variants may be supported for the given data resource.

In the method, information on a data structure of the data stored in the first portion, or so-called meta-data, may be stored in the second portion. The information on the data structure may include at least one of information on different data fields and data field sizes, data types and an order of the different data fields of the data stored in the first portion. For example, when the data stored in the first portion is image data, the information on the data structure may indicate that the data stored in the first portion includes a set of integers indicating the image height, width and color coding scheme, and binary data, e.g., bitmap data. The information on the data structure may further include information on whether the data stored in the first portion are compressed, and/or information on which data compression scheme is employed. For example, if the data stored in the first portion are run length encoded, the information on the data structure may include a respective indication. By including the information on the data structure in the second portion of the data archive, upward and downward compatibility may be attained.

In the method, not only one but several data archives may be generated. The data archive into which the data are written may, for example, be utilized to supplement or overwrite data in another data archive. The method may then comprise establishing whether other data corresponding to one of the plurality of variants for the given data resource are included in another data archive, and storing, in the second portion, priority information indicative of a priority of the data archive. Thereby, a priority of different data archives may be established. For example, data corresponding to two language settings may already be stored in another data archive, while only data corresponding to a third language setting are written into the data archive, or data that are intended to replace data for one of the language settings already stored in the other data archive may be included in the data archive. The data archive may also include an entry in its second portion that declares data resources stored in the other data archive void. By adding the data archive to the other data archive and storing priority information in the second portion of the data archive, updates to new or alternative data resources are facilitated.

The plurality of variants for the data resource may correspond, for example, to at least one of different language settings, different daytime settings, or different data output settings for the given data resource. The different data output settings may include different layouts for images output on a display device. The plurality of variants for the given resource may correspond to different settings for a navigation device onboard a vehicle.

According to another aspect, a data processing apparatus is provided as mentioned in claim 6. It comprises an interface to receive data to be written into a data archive, a storage device having a first portion and a second portion, and a processor coupled to the interface and the storage device. The processor is operable to receive the data from the interface, to store the data in the first portion, and to generate, in the second portion, an entry that indicates a storage location of the data in the first portion. The processor is further operable to generate, in the second portion, a further entry comprising an identifier for the entry when the data correspond to one of a plurality of variants for a given data resource. The data processing apparatus according to this aspect is configured to perform the method of writing data to a data archive according to the various embodiments described above.

The apparatus may comprise an input device coupled to the processor to receive a user input which indicates whether the data correspond to one of the plurality of variants for the given data resource. The processor may be configured to perform the method of writing data to a data archive according to any one of the various embodiments described herein.

According to another aspect, a method of reading data from a data archive is provided as mentioned in claim 10. The method comprises receiving a resource identifier for a data resource to be retrieved from the data archive comprising a first portion and a second portion, and accessing a first entry in the second portion of the data archive based on the resource identifier to retrieve from the first entry one of information on a storage location of data corresponding to the data resource in the first portion or an identifier for a second entry in the second portion. When the identifier for the second entry is retrieved from the first entry, the second entry is accessed to retrieve information on the storage location of the data, and the data is read from the first portion based on the information on the storage location.

As the first entry may include an identifier for a second entry that can be accessed to retrieve information on the storage location of the data, a plurality of variants for a data resource may be supported by successively accessing the first and second entries to retrieve the information on the storage location of the data.

In the method, the information on the storage location of the data may, but does not have to be retrieved directly from the second entry. Rather, the second entry may comprise an identifier for a third entry in the second portion of the data archive, which is accessed to retrieve the information on the storage location therefrom. More iterations of accessing entries in the second portion before retrieving the information on the storage location from one of the entries may be implemented, when required.

When data corresponding to a plurality of variants for the data resource are stored in the data archive, the first entry may comprise a plurality of identifiers for a plurality of second entries, which correspond to the plurality of variants. As the first entry in the second portion may direct the resource request to the plurality of second entries stored in the second portion, different variants for the data resource may be stored in the data archive, the first entry serving as a branching point to the second entries associated with the different variants.

The identifier for the second entry may be selected from the plurality of identifiers based on an active variant for the data resource, e.g., based on a currently active language setting or daytime setting. When the first entry does not comprise an identifier for a second entry that corresponds to the active variant, e.g., the active language, a fallback variant may be selected based on the active variant for the data resource, or a default variant may be activated. The plurality of variants for the data resource may correspond to at least one of different language settings, different daytime settings, or different data output settings for the given data resource, in particular such settings for a navigation device onboard a vehicle.

Not only one, but a set of data archives may be provided which may be successively accessed to retrieve the data resource. For example, a further data archive may be accessed using one of the resource identifier or the identifier for the second entry to retrieve information on the storage location of the data from the further data archive when the data archive does not comprise a first entry corresponding to the resource identifier or a second entry corresponding to the identifier for the second entry. When a set of data archives is used, higher versatility in updating the data archives is achieved, as the data archive may supplement or replace data stored in the further data archive, or vice versa. Priority information respectively included in the second portion of each of the data archives may be retrieved, and the data archives may be searched for matching entries in order of their priorities. Information on a data structure of the data resource may be retrieved from the second portion, and the data may be read based on the information on the data structure. By utilizing the information on the data structure stored in the second portion of the data archive, upward and downward compatibility is achieved. For example, the information on the data structure may include information on a compression of the data stored in the first portion. The data may be decompressed based on the information on the data structure. The information on the data structure may be retrieved, for example, based on a data type specified in the first entry or the second entry.

According to another aspect, a data processing apparatus is provided as mentioned in claim 17. It comprises a storage device having a first portion and a second portion, and a processor coupled to the storage device to retrieve a data resource from the storage device based on a resource identifier. The processor is operable to access a first entry in the second portion based on the resource identifier to retrieve from the first entry one of information on a storage location of data corresponding to the data resource in the first portion or an identifier for a second entry in the second portion. The processor is further operable to access, when the identifier for the second entry is retrieved from the first entry, the second entry in the second portion to retrieve information on the storage location of the data. The processor then reads the data from the first portion based on the information on the storage location. A thus configured data processing apparatus may be utilized to perform the method according to any one embodiment described herein.

The data processing apparatus may be comprised by a navigation device for use onboard a vehicle. The navigation device may further comprise an output device coupled to the processor and operable to output the data read from the first portion and corresponding to the data resource. In one exemplary embodiment, the output device may be an optical output device, such as a display or a video projector, the data resource being image data, for example bitmap data. In another exemplary embodiment, the output device may be an acoustic output device.

The methods and apparatuses according to the various aspects and embodiments of the invention may be utilized in all fields of application in which data is written to and read from data archives. It is anticipated that human-machine interfaces, e.g., of a navigation device installed in a vehicle, are one field of application. However, the invention is not limited to this specific application.

### Brief Description of the Drawings

The invention will next be described in more detail with reference to the accompanying drawing.
Fig. 1 is a block diagram representation of a data processing apparatus for writing data to a data archive.
Fig. 2 is a schematic representation of a data archive.
Fig. 3 is a schematic representation of second portion of another data archive.
Fig. 4 is a flow diagram representation of a method of writing data into a data archive.
Fig. 5 is a flow diagram representation of another method of writing data into a data archive.
Fig. 6 is a flow diagram representation of another method of writing data into a data archive.
Fig. 7 is a block diagram representation of a navigation device including a data processing apparatus for reading data from a data archive.
Fig. 8 is a flow diagram representation of a method of reading data from a data archive.
Fig. 9 is a flow diagram representation of another method of reading data from a data archive.
Fig. 10 is a flow diagram representation of a method of reading data from a data archive of a set of data archives.
Fig. 11 is a flow diagram representation of another method of reading data from a data archive of a set of data archives.
Fig. 12 is a schematic partial representation of a set of data archives.
Fig. 13 is a flow diagram representation of a method of reading data from a data archive.
Fig. 14 is a flow diagram representation of method steps that may be implemented in the method of Fig. 13.

### Detailed Description of Preferred Embodiments

Hereinafter, exemplary embodiments of the invention will be described with reference to the drawings. It is to be understood that the invention is not limited to the specific embodiments shown in the drawings and described herein.

According to embodiments of the invention, methods of writing data into and reading data from a data archive and corresponding data processing apparatuses are provided that allow a plurality of variants for a given data resource to be supported in a data archive while keeping storage space requirements at moderate levels. As used herein, the term "data resource" generally relates to any data, e.g., text, graphics, position data, size data or similar, that may be required as a resource by software or hardware in an electronic device. In exemplary embodiments, the term "data resource" may correspond to textual or graphical data to be output on a display device of a navigation device. A data resource may be associated with a plurality of data that correspond to a plurality of variants for the data resource. For example, when two language settings are to be supported, a data resource may be associated with two text strings, e.g., "rechts" and "right" for German and English language support, respectively. In some embodiments, a data archive includes a first and second portion, respectively, and/or a storage unit has a first and second portion. These terms of first and second portion are not intended to imply any physical separation. Rather, the first and second portions of the data archive may be comprised by one physical storage medium, e.g., a hard disk, CD, DVD, flash memory or similar. In some of the embodiments, an "entry", "further entry", "first entry" or "second entry" is generated in a portion of the data archive or accessed in a portion of the data archive. The term "entry" as used herein generally relates to any data or set of data that are stored in the second portion of the data archive. The term "identifier" generally relates to a datum or data that allow an entry in the second portion to be identified or accessed.

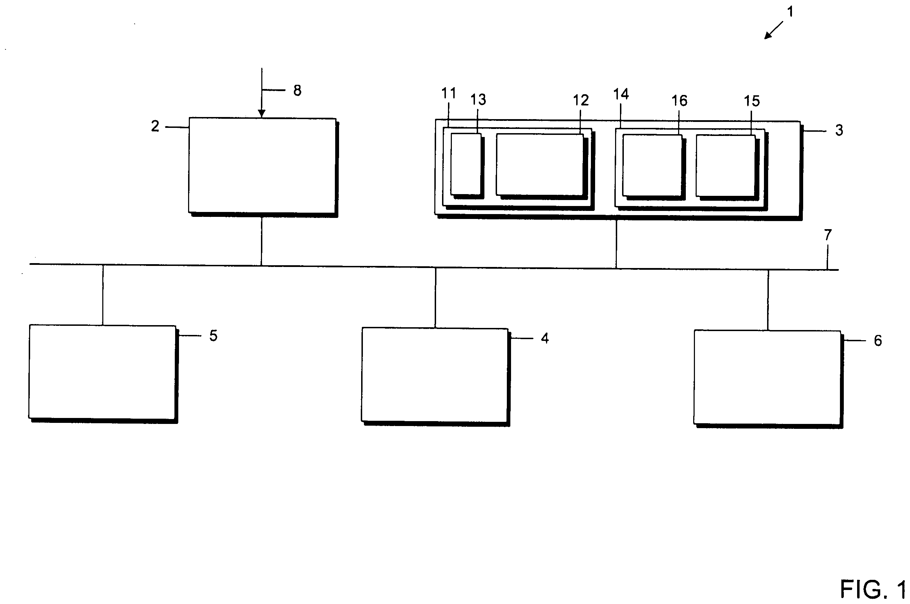

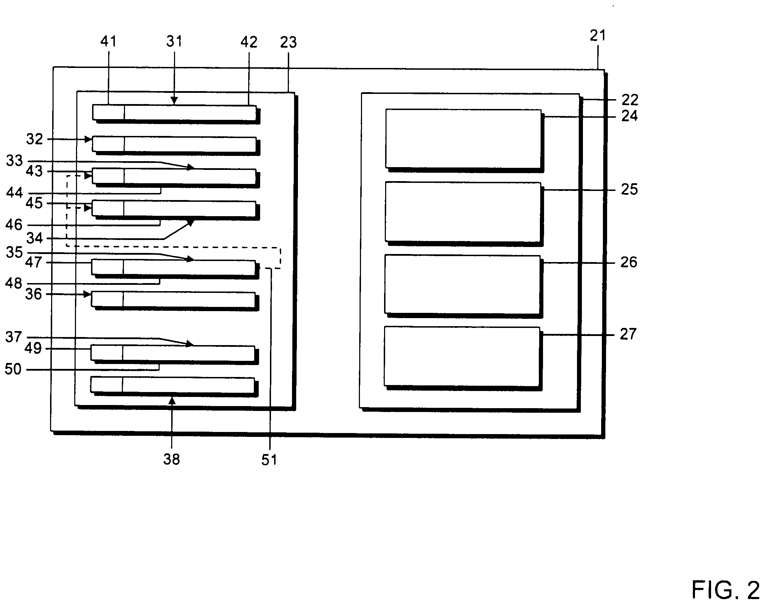

Fig. 1 is a schematic block diagram representation of a data processing apparatus 1 that allows data to be written into a data archive. The apparatus 1 comprises an interface 2, a storage device 3, a processor 4, an input device 5 and a data storage medium 6 that are coupled to each other via a bus 7. At the interface 2, data 8 are received from, e.g., an additional storage or memory device. Alternatively, the interface 7 may also be connected to an input device for inputting the data 8. The data storage medium 6 has stored therein instructions which, when executed by the processor 4, direct the processor 4 to write the data 8 into a data archive stored in storage device 3, as will be described in more detail with reference to Figs. 2-6 below. At the input device 5, a user input may be received which indicates whether the data 8 correspond to one of a plurality of variants for a given data resource, the processor 4 writing the data into the data archive based on the user input. The data processing apparatus 1 may be a general-purpose computer, the processor 4 being suitably configured by instruction code stored on the data storage medium 6 to write data into the data archive according to one of the methods described in more detail below.

The storage device 3 has stored therein a set of data archives 11, 14. The data archive 11 has a first portion 12 and a second portion 13, and the data archive 14 has a first portion 15 and a second portion 16. While two data archives 11, 14 are shown in the apparatus of Fig. 1, the invention is not limited thereto, and only one data archive or more than two data archives may be stored on the storage device 3. Further, even when the apparatus 1 generates more than one data archive, the different data archives may be generated successively, i.e., only one data archive may be stored in the storage device 3 at a time. As data may be written into one of several data archives 11, 14 in the apparatus 1, a set of data archives may be generated that provides enhanced versatility for supporting a plurality of variants for data resources to be output. For example, data that correspond to a set of basic variants for data resources that are always supported in an electronic device may be stored in one data archive 11, while optional variants that are supported by only some electronic devices may be stored in the other data archive 14. For illustration, data that correspond to textual output for basic language settings, such as German and English, may be stored in the data archive 11, while data that correspond to textual output for additional language settings, such as Japanese or Chinese, may be stored in the data archive 14. The data archive 14 may be installed only in electronic devices, e.g., navigation devices, that are distributed in Japan or China, while the data archive 11 is by default installed in any electronic device, or vice versa.

For illustration only it will be assumed that the data 8 are to be written into the data archive 11. When the data 8 are received at the interface 2, the processor 4 stores the data in the first portion 12 of the data archive 11. Before storing the data 8 in the first portion 12, the data 8 may be compressed using, for example, run length encoding. As will be described more fully with reference to Figs. 2-6 below, the processor 4 generates an entry and, depending on whether the data 8 correspond to one of a plurality of variants for a given data resource, a further entry in the first portion 13 of the data archive.

Fig. 2 is a schematic representation of a data archive 21. A structure identical or similar to the one schematically shown in Fig. 2 may be utilized for implementing the data archives 11, 14 in the apparatus 1 of Fig. 1.

The data archive 21 has a first portion 22 and a second portion 23. Stored in the first portion 22 are data 24-27. The data 24-27 stored in the first portion 22 may correspond to different data resources, or several of the data 24-27 may correspond to different variants for the same data resource. The data 24-27 may correspond to, for example, textual data, graphical data, audio data or similar.

The second portion 23 of the data archive 21 has stored therein entries 31-36 which are generated such that they may be accessed in order to retrieve information on a storage location of the data 24-27 stored in the first portion 22, and information 37 and 38 on a data structure of the data 24-27 stored in the first portion 22. Each of the entries 31-38 is generated such that it has an identifier section that allows the entry to be identified and accessed. For example, entry 31 has an identifier section 41, entry 33 has an identifier section 43, entry 34 has an identifier section 45, entry 35 has an identifier section 47 and entry 36 has an identifier section 49. Similarly, the other entries 32 and 37 respectively have an identifier section that is schematically indicated in Fig. 2. The identifier section may include a numerical identifier that is unique for the specific entry, and at least the entries 31-36 which are generated such that they may be accessed in order to retrieve information on a storage location of the data 24-27 in the first portion 22 may be sorted according to their numerical identifiers to facilitate retrieval of the entries based on their identifiers.

When data to be written into the data archive 21 are received, e.g., at the interface 2 of the apparatus 1 of Fig. 1, the data are written into the first portion 22 and a corresponding entry is generated in the second portion 23. For example, when the data 24 are written into the first portion 22, the entry 31 is generated in the second portion 23, when the data 25 are written into the first portion 22, the entry 32 is generated in the second portion 23, when the data 26 are written into the first portion 22, the entry 33 is generated in the second portion 23, and when the data 27 are written into the first portion 22, the entry 34 is generated in the second portion 23. In addition to the respective identifier section, each of entries 31-34 is generated such that it has a section including, at least, information on a storage location of the respective data 24-27 in the first portion 22. The information on the storage location may be, e.g., a numerical value indicating an offset of the respective data 24-27 in the first portion 22. For example, section 42 of the entry 31 includes an offset for the data 24, section 44 of the entry 33 includes an offset for the data 26, and section 46 of the entry 34 includes an offset for the data 27.

When data are written into the data archive 21, it is determined whether the data correspond to one of a plurality of variants for a given data resource. The determination of whether the data correspond to one of a plurality of variants for a given data resource may be made based on a user input. For example, in the apparatus 1 of Fig. 1, a user input at the input device 5 may be evaluated by the processor 4 to determine whether the data 8 received at the interface 2 correspond to one of a plurality of variants for a given data resource.

For illustration rather than limitation, it will be assumed in the following that the data 24 correspond to a first data resource, there being no variants for the first data resource, and that the data 25 correspond to a second data resource, there being no variants for the second data resource, while data 26 and data 27 correspond to two variants for a third data resource. For example, when the data 24-27 are textual data and the data archive is to support two different languages, such as English and German, the data 24 and the data 25 may correspond to a text string that is identical in English and German, such as "Start" and "Stop", so that only a single version of the data resource has to be stored in the first portion 22, while the data 26 and 27 may correspond to different language variants for one data resource, such as "rechts" and "right", respectively. In other implementations, the data 26, 27 could also correspond to different daytime settings, such as day and night settings, or to different graphical output settings for a given data resource.

When the data 26 and the data 27 are stored in the first portion 22 and the corresponding entries 33 and 34, respectively, are generated in the second portion 23, a further entry 35 is generated in the second portion 23, as the data 26, 27 correspond to different variants for one data resource. The further entry 35 is generated such that a section 48 of the further entry 35 includes an identifier for each one of the entries 33, 34 corresponding to the data 26, 27. Reverting to the example in which the data 26, 27 correspond to a first and second language setting, the section 48 of the further entry 35 includes the identifier for the entry 33 in association with the first language setting and the identifier for the entry 34 in association with the second language setting. For example, the identifiers for the entries 33, 34 may be stored as an array in the order of different language settings, or a descriptor indicative of the respective language setting may be added to each of the identifiers for the entries 33, 34. While the values in the identifier section 43, 45 of the entries 33, 34 may be identical to the identifiers included in section 48 of the further entry 35, the values in the identifier section 43, 45 of the entries 33, 34 may also differ from the identifiers in section 48 of the further entry 35, provided that the identifiers in section 48 allow the entries 33, 34 to be identified.

As the further entry 35 includes identifiers for the entries 33, 34 stored in the second portion 23, rather than information on a storage location of data in the first portion 22, the further entry 35 may serve as a branching point when the data archive 21 receives a request for a specific data resource, as it is capable to direct the request to either one of the entries 33, 34, depending on which variant of the plurality of variants is desired, as schematically indicated by dashed arrow lines 51.

Further, entries 37 and 38 are generated in the second portion 23, which include information on a data structure of the data 24-27 stored in the first portion 21. The entry 37 includes an identifier section 49 indicative of a data type, such as image or text, and a section 50 with information on a data structure for the corresponding data type. For example, for a data type "image", the information in the section 50 may specify that the corresponding data stored in the first portion 22 has a data structure in which a number of integers at the beginning of the data represent an image height, width, color coding scheme and information on a compression or encoding of the image data, and then binary data associated with, e.g., the pixels of the image. The entry 38 may be configured in an analogous manner.

When generating the entries 31-34 and/or the further entries 35, 36, information on the data type of the respective data 24-27 may be written into the respective entries and/or further entries, so as to allow the information 37, 38 on the data structure to be associated with the respective data 24-27. The information 37, 38 on the data structure stored may be utilized when reading data from the data archive 21.

While in the data archive 21 of Fig. 2 a further entry 35 is shown that comprises identifiers for the entries 33, 34, which in turn include information on the storage location of the corresponding data 26, 27 in the first portion 22, the generation of further entries may be recursively repeated. Every entry in the second portion of the data archive may be associated with a hierarchy of further entries. Each stage of the hierarchy may correspond to a plurality of variants. For example, both different language settings and different daytime settings, and/or different graphical output settings may be supported for a given data resource, and a hierarchy stage of further entries may be generated for each of these pluralities of variants.

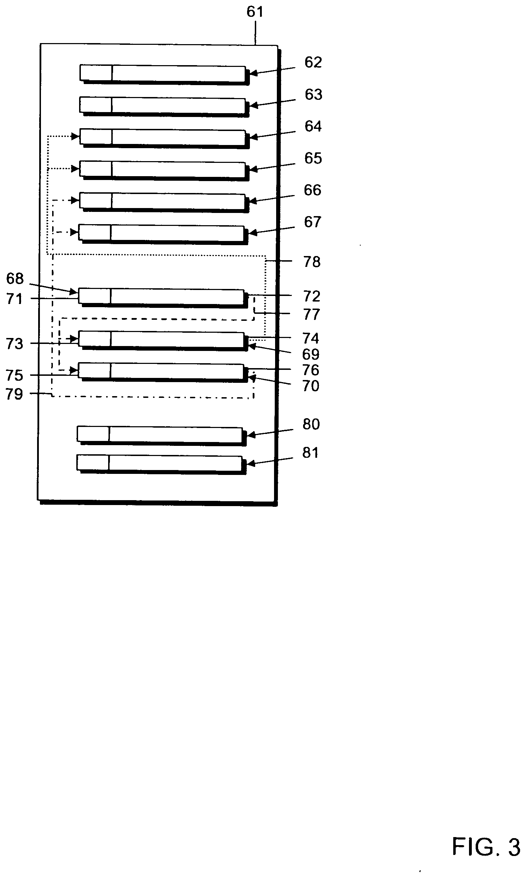

Fig. 3 is a schematic representation of a second portion 61 of a data archive. A structure identical or similar to the one schematically shown in Fig. 3 may be employed for implementing the second portions 13, 16 of the data archives 11, 14 in the apparatus of Fig. 1. The first portion of the data archive may be implemented identically or similarly to the first portion 22 of Fig. 2.

The second portion 61 of the data archive of Fig. 3 comprises a plurality of entries 62-67 and further entries 68-70. Similarly to the entries 31-34 of Fig. 2, each one of the entries 62-67 in Fig. 3 has an identifier section and a section including information on a storage location of corresponding data in the first portion of the data archive. Each one of the further entries 68-70 has an identifier section 71, 73, 75 and a section 72, 74, 76 comprising an identifier for an entry or further entry in the section 61. In the illustrated second portion 61, the further entry 69 has a section 74 comprising identifiers for the entries 64, 65, as schematically indicated by dotted arrow lines 78, and the further entry 70 has a section 76 comprising identifiers for the entries 66, 67, as schematically indicated by dashed-dotted arrow lines 79. The further entry 68 has a section 72 comprising identifiers for the further entries 69, 70, as schematically indicated by dashed arrow lines 77. Thus, the further entries 69, 70 constitute one hierarchy stage of the hierarchy of further entries, while the further entry 68 constitutes another hierarchy stage of the hierarchy of further entries.

When the data corresponding to the entries 64-67 are written into the first portion of the data archive and the entries 64-67 are generated in the second portion 61, it is determined that the data corresponding to the entries 64-67 correspond to one of a first plurality of variants (e.g., two different daytime settings) and to one of a second plurality of variants (e.g., two different language setting) for a given data resource. This determination may be made based on, e.g., a user input. The entry 64 is generated for data corresponding to one variant (e.g., language setting "German") of the first plurality of variants and one variant (e.g., daytime setting "day") of the second plurality of variants, the entry 65 is generated for data corresponding to another variant (e.g., language setting "English") of the first plurality of variants and the one variant (e.g., daytime setting "day") of the second plurality of variants, the entry 66 is generated for data corresponding to the one variant (e.g., language setting "German") of the first plurality of variants and another variant (e.g., daytime setting "night") of the second plurality of variants, and the entry 67 is generated for data corresponding to the other variant (e.g., language setting "English") of the first plurality of variants and the other variant (e.g., daytime setting "night") of the second plurality of variants. Based on this information, the further entries 69 and 70 are generated, each of which respectively comprises identifiers for the entries corresponding to the various variants of the first plurality of variants for a specific one of the second plurality of variants. I.e., the further entry 69 comprises identifiers for the entries 64, 65 corresponding to the various variants of the first plurality of variants and the fixed one variant of the second plurality of variants, while the further entry 70 comprises identifiers for the entries 66, 67 corresponding to the various variants of the first plurality of variants and the fixed other variant of the second plurality of variants. The further entry 68 is generated which comprises identifiers for the further entries 69, 70, i.e., for the further entries which are respectively associated with different variants of the second plurality of variants.

When a request for a data resource is received at the second portion 61 of the data archive of Fig. 3, the further entry 68 serves as a branching point for the second plurality of variants and directs the request to either one of the further entries 69, 70, depending on which variant of the second plurality of variants is desirable, while each one of the further entries 69, 70 serves as a branching point for the first plurality of variants, thereby directing the request to one of the entries 64-67, from which the storage location of the data corresponding to the desired variants of the first and second pluralities of variants may be retrieved.

The second portion 61 of Fig. 3 further comprises information 80, 81 on a data structure of data stored in the first portion of the data archive, which are generally similar in configuration to the information 37, 38 on a data structure of Fig. 2 explained above.

While exemplary configurations of data archives and of first and second portions thereof have been explained with reference to Figs. 2 and 3, these specific configurations have been explained for the purpose of illustration rather than limitation. For example, the number of data stored in the first portion may be varied as appropriate. Similarly, the number of entries and further entries in the second portion may also be varied as appropriate. Further, while exemplary entries and further entries have been illustrated that include an identifier section and an additional section comprising information on a storage location in the first portion or an identifier for an entry, the entries and further entries may have more complex configurations and may include additional data as appropriate for a contemplated application. While, in the second portions of the data archive of Figs. 2 and 3, the further entries have been shown spatially separated from the entries in the second portion, the entries and further entries may be combined in a single list, there being no logical or physical separation between entries comprising information on a storage location of data in the first portion or further entries comprising an identifier for an entry in the second portion. In one embodiment, the single list of entries and further entries is sorted according to the identifier sections to facilitate retrieval of an entry or further entry in the list.

While not shown in Figs. 2 and 3, additional information may be included in the second portion of the data archive. For example, when a set of data archives is to be used, priority information indicating the priority of the specific data archive may be stored in the second portion of the data archive.

Further, not every entry or further entry in the second portion of the data archive has to include information on a storage location or an identifier for an entry in the second portion. Rather, entries or further entries may also be generated so as to declare data stored in the first portion of another data archive, to be void. In this manner, data included in another data archive of a set of data archives may be masked or updated by adding a data archive having higher priority and declaring data stored in the other data archive to be void by generating corresponding entries in the data archive.

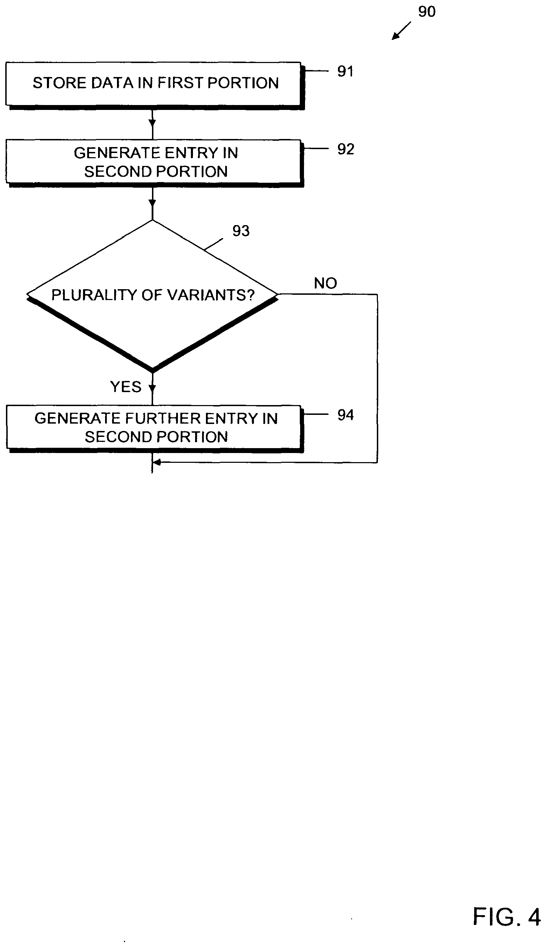

Fig. 4 is a flow diagram representation of a method 90 of writing data into a data archive. The method 90 may, for example, be performed by the processor 4 of the apparatus 1 of Fig. 1 to write data into one of the data archives 11 or 14.

At 91, data is stored in a first portion of the data archive. At 92, an entry is generated in a second portion of the data archive, the entry comprising information on a storage location of the data in the first portion of the data archive. The information on the storage location may, for example, have the form of an offset value. At 93, it is determined whether the data correspond to one of a plurality of variants, e.g., one of different language or daytime settings, for a given data resource. If the data do not correspond to one of a plurality of variants for the given data resource, the method 90 terminates, and, when required, steps 91-94 may be repeated for other data. When the data correspond to one of a plurality of variants for the data resource, the method proceeds to 94. At 94, a further entry is generated in the second portion, the further entry comprising an identifier for the entry generated at 92.

Referring back to the data archive 21 of Fig. 2, the method 90 will be further illustrated. When the data 24 are written into the data archive 21, at 91, the data 24 are stored in the first portion 22, and at 92, the entry 31 is generated in the second portion 23. At 93, it is determined that the data 24 do not correspond to one of a plurality of variants for a given data resource, so that the method 90 terminates. When the data 26 are written into the data archive 21, at 91, the data 26 are stored in the first portion 22, and at 92, the entry 33 is generated in the second portion 23. At 93, it is determined that the data 26 correspond to one of a plurality of variants for a given data resource. At 94, the further entry 35 is generated in the second portion 23.

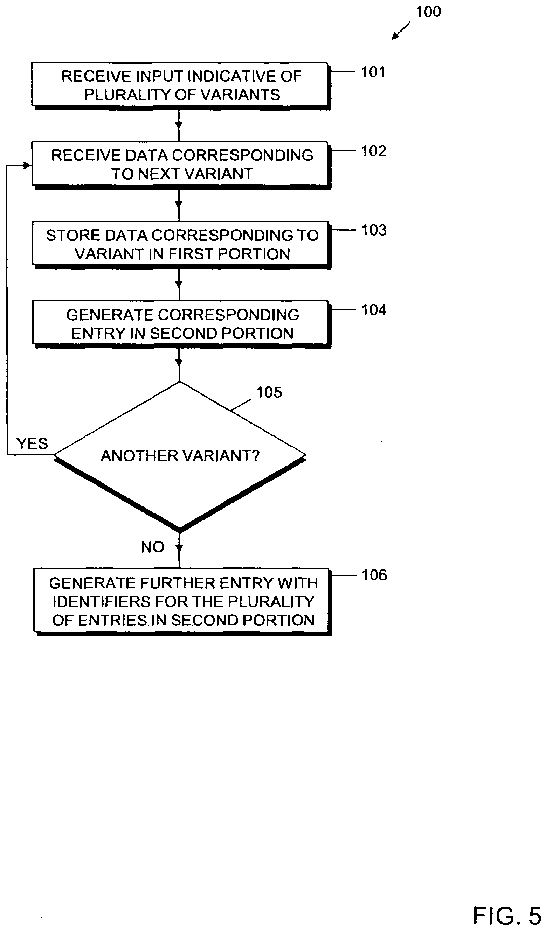

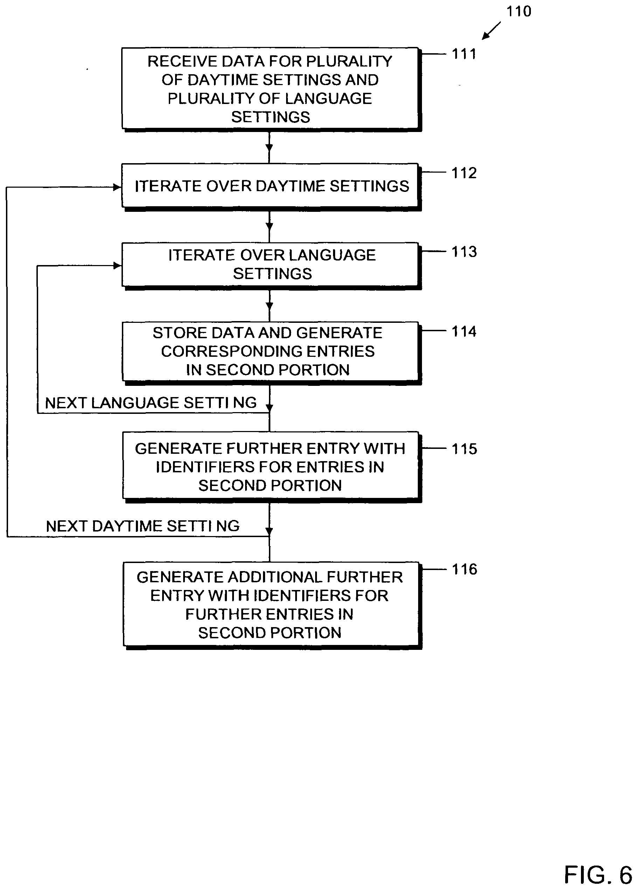

The further entry generated at 94 does not have to be generated separately when one entry has been generated in the second portion at 92. Rather, the second entry may be generated after a plurality of entries corresponding to the plurality of variants for the given data resource have been generated, as will be explained with reference to Figs. 5 and 6 next.

Fig. 5 is a flow diagram representation of a method 100 of writing data into a data archive. The method 100 may, for example, be performed by the processor 4 of the apparatus 1 of Fig. 1 to write data into one of data archives 11 or 14.

At 101, an input is received which indicates that data corresponding to a plurality of variants for a given data resource is to be written to the data archive. The input may be a user input. At 102, data corresponding to the next one of the plurality of variants are received. In the first iteration through loop 102-105, data corresponding to the first variant of the plurality of variants are received. At 103, the data corresponding to this variant are stored in the first portion. At 104, a corresponding entry associated with the data stored in the first portion is generated in the second portion. At 105, it is determined whether there are data corresponding to another variant of the plurality of variants. If there are data corresponding to another variant, the data are received at 102 and the loop 102-105 is repeated. When it is determined at 105 that there are no more data corresponding to another variant of the plurality of variants, at 106 a further entry is generated which comprises identifiers for the plurality of entries generated at 103 in the iterations through the loop 102-105.

Referring again to the data archive 21 of Fig. 2, the method 100 will be further illustrated. When the data 26 and 27 are written into the data archive 21, at 101, an input is received which indicates that the data 26 and 27 correspond to a plurality of variants for a given data resource. At 102, the data 26 are received. At 103, the data 26 are stored in the first portion 22. At 104, the entry 33 is generated in the second portion 23. At 105, it is determined that there are further data, namely data 27, corresponding to the plurality of variants. Therefore, the method returns to 102, and at 102 and 103, the data 27 are received and stored in the first portion 22, and at 104 the entry 34 is generated in the second portion 23. As there are no further data corresponding to the plurality of variants, the method proceeds to 106, where the further entry 35 is generated which comprises identifiers for the entry 33 and the entry 34.

As already indicated with reference to Fig. 3 above, a hierarchy of further entries may also be generated to support several pluralities of variants for a given data resource. I.e., additional further entries may be generated in the second portion of the data archive that comprise identifiers for further entries in the second portion of the data archive, which in turn may comprise information on a storage location of the corresponding data in the first portion or an identifier for an entry or a further entry in the second portion of the data archive, as will be explained in more detail with reference to Fig. 6 below.

Fig. 6 is a flow diagram representation of a method 110 of writing data into a data archive. The method 110 may, for example, be performed by the processor 4 of the apparatus 1 of Fig. 1 to write data into one of the data archives 11 or 14.

In the method of Fig. 6, data corresponding to a plurality of daytime settings (e.g., "day" and "night" settings) and to a plurality of language settings (e.g., "German" and "English") are to be written into a data archive. At 111, data corresponding to the plurality of daytime settings and the plurality of language settings are received. At 112, an iteration loop over daytime settings is started, which includes selecting a specific one of the daytime settings in each iteration. At 113, an iteration over language settings is started, which is nested into the iteration over daytime settings and which includes selecting a specific one of the language settings in each iteration. At 114, data corresponding to the specific daytime and language setting are stored in the first portion, and a corresponding entry is generated in the second portion of the data archive, the entry including information on a storage location of the data for the specific daytime and language settings. As only schematically indicated by an arrow in Fig. 6, after 114, the iteration over language settings is continued, provided that there is still a language setting left. In that case, the method returns to 113, where the next language setting is selected, etc. When there is no language setting left, the method proceeds to 115, where a further entry is generated in the first portion which comprises identifiers for all entries generated at 114 in the iteration over language settings for the specific daytime setting. I.e., the further entry generated at 115 is associated with the specific daytime setting and comprises the identifiers for the entries associated with the specific daytime setting and the various language settings. As only schematically indicated by an arrow in Fig. 6, after 115, the iteration over daytime settings is continued, provided that there is still a daytime setting left. When another daytime setting is left, the method returns to 112, where another daytime setting is selected and the iteration over 113-115 is repeated. When there is no daytime setting left, the method proceeds to 116, where a further entry is generated in the second portion of the data archive, which comprises identifiers for the further entries generated at 115 in the iterations over daytime settings. When required, the method 110 may then be repeated for data corresponding to the plurality of daytime and language settings for another data resource.

While the method 110 of Fig. 6 has been explained with reference to daytime and language settings for illustration, it may be equally applied to any first and second plurality of variants for a given data resource.

Referring again to the second portion 61 of the data archive of Fig. 3, the method 110 will be further illustrated. At 111, data corresponding to daytime settings "day" and "night" and to language settings "German" and "English" are received. At 112, the daytime setting is selected to be "day", and subsequently two iteration loops 113, 114 are performed over the language settings, in which the entry 64 is generated, which corresponds to daytime setting "day" and language setting "German", and the entry 65 is generated, which corresponds to daytime setting "day" and language setting "English". As there are no data left corresponding to additional language settings, at 115, the further entry 69 is generated, which comprises identifiers for the entries 64 and 65. Then, the method returns to 112, where the daytime setting is selected to be "night", and subsequently two iteration loops 113, 114 are performed over the language settings, in which the entry 66 is generated, which corresponds to daytime setting "night" and language setting "German", and the entry 67 is generated, which corresponds to daytime setting "night" and language setting "English". As there are no data left corresponding to additional language settings, at 115, the further entry 70 is generated, which comprises identifiers for the entries 66 and 67. As there are no data left corresponding to additional daytime settings, at 116, the further entry 68 is generated, which comprises identifiers for the further entries 69 and 70.

The method 110 of Fig. 6 thereby generates a hierarchy of further entries, the further entries serving as branching points for the various variants of the first plurality of variants or the various variants of the second plurality of variants, respectively, when a request for the data resource is received.

While methods of writing data to a data archive according to illustrative embodiments have been described above, the methods and apparatuses of the invention are not limited to these illustrative embodiments. For example, when data corresponding to different data resources are written into the data archive, the various methods described above may be combined with each other as appropriate. When no plurality of variants or only one set of variants for the given data resource is supported, method steps identical or similar to the ones described with reference to Figs. 4 and 5 may be employed to write the data into the data archive, while a hierarchy of further entries may be generated in the second portion of the data archive when several pluralities of variants are to be supported for the specific data resource, using method steps identical or similar to the ones described with reference to Fig. 6. In particular, while no variants at all may be required for some data resources, there may be other data resources that require only support for, e.g., different language settings, while still other data resources may require support for both different language settings and different daytime or data output settings.

Further, while not shown in Figs. 4-6, in the method of writing data to a data archive, additional information may be stored in the data archive. For example, priority information may be stored in the second portion of the data archive to indicate a priority of the data archive as compared to other data archives of a set of data archives, or information on the data structures of the data stored in the first portion may be stored in the second portion.

The various methods of writing data to a data archive and the corresponding data processing apparatus described above may be employed to generate data archives for arbitrary applications, in particular for use in a human-machine interface of an electronic device, where it may be desirable to support different variants for a given data resource, while keeping storage space requirements moderate and providing versatility in updating or supplementing existing data archives. For example, the data stored in the data archive may correspond to textual, graphical or acoustic data that is to be output to a user of a navigation device, or to roadmap data or similar data that are employed for navigation purposes in a navigation device.

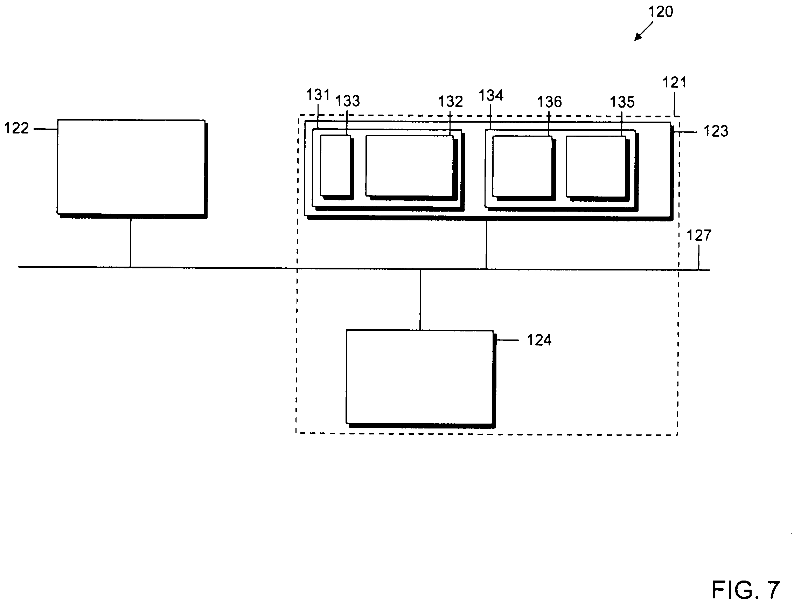

With reference to Figs. 7-14, apparatuses and methods for reading data from a data archive will be described.

Fig. 7 is a schematic block diagram representation of a navigation device 120 which has a data processing apparatus 121 according to an embodiment and an output device 122 coupled to the data processing apparatus 121 via a bus 127.

The data processing apparatus 121 comprises a processor 124 and a storage device 123 having stored therein a set of data archives, namely two data archives 131 and 134 in the apparatus 121. While two data archives 131, 134 are stored in the storage device 123 of the apparatus 121, in other implementations only one data archive or more than two data archives may be stored in the storage device 123. The processor 124 may be a general purpose processor which executes instructions stored on a storage medium (not shown in Fig. 7) to perform a method of reading data from the data archives 131, 134 according to one of the methods that will be described in more detail below.

The data archives 131 and 134 are digital data archives, each of which has a first portion 132, 135 and a second portion 133, 136, respectively. The first portions 132, 135 of the data archives 131 and 134 respectively store data corresponding to different data resources and/or, where required, to different variants for data resources. The second portions 133, 136 of the data archives 131, 134 respectively have entries that are accessed to determine a storage location of a specific data resource, and further store information on data structures of the data stored in the first portions 132, 135 of the respective data archives 131 and 134.

The entries in the second portions 133, 136 of the data archives 131, 134 that may be accessed in order to determine a storage location of a specific data resource respectively comprise one of information on a storage location in the first portion 132, 135 of the respective data archive or an identifier for another entry in the second portion 133, 136. For example, each of the entries accessed in order to determine a storage location of a specific data resource may have an identifier section that allows the respective entry to be uniquely identified, while either one of information on a storage location, e.g., a data offset, in the first portion or an identifier for another entry in the second portion 133, 136 may be included in another section of the entry. The identifier section may store a numerical value, and the entries in the second portion may be sorted such that the numerical values in their identifier sections increases or decreases monotonously to facilitate retrieval of an entry based on its identifier.

The data archives 131, 134 may in particular have a configuration that is obtained by the methods for writing data to a data archive and the corresponding data processing apparatus described with reference to Figs. 1-6 above. In the following description with reference to Figs. 7-14, the term "entry" in the second portion of the data archive is used irrespective of whether the "entry" comprises information on a storage location in the first portion or an identifier for another entry in the second portion of the data archive. I.e., the term "entry" of the second portion may refer to either one of the terms "entry" or "further entry" as used in connection with Figs. 1-6.

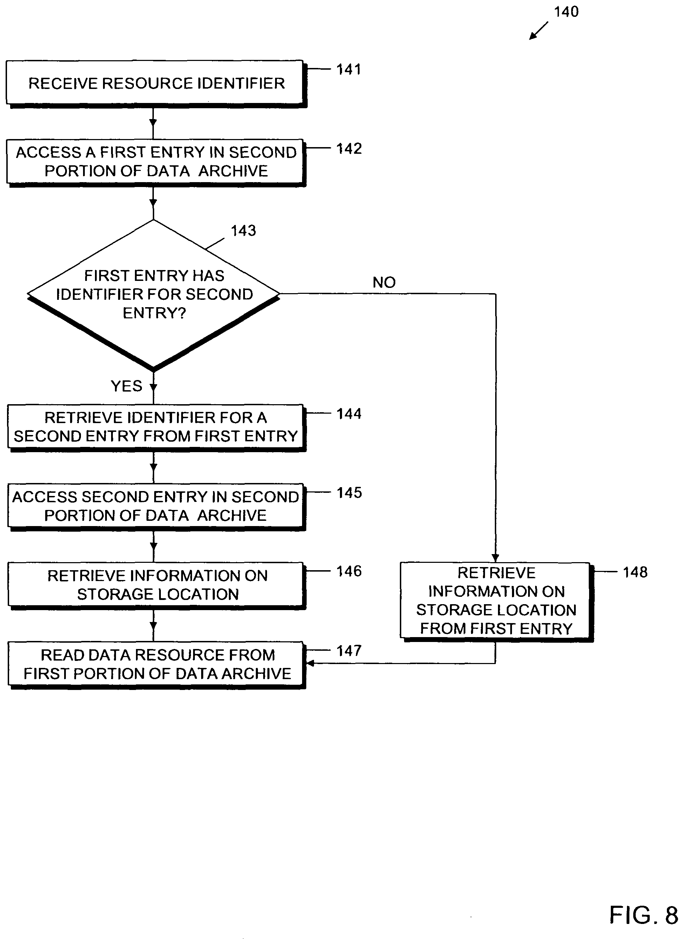

Various methods for reading data from a data archive having this configuration will be described with reference to Fig. 8-14 below. The methods may be performed by the processor 124 of the data processing apparatus 121 in order to read data from either one of the data archives 131, 134. In the methods, a resource identifier is provided as an input, and data corresponding to the data resource specified by the resource identifier are read in response thereto, or a storage location of the data is determined in response thereto. The resource identifier may be generated by software or hardware to request the resource specified by the resource identifier. The resource identifier may, in particular, be a numerical identifier that uniquely identifies the data resource. As the data archive may have stored therein different data corresponding to different variants for one resource specified by the resource identifier, different data may be read from the data archive in response to the resource identifier when different variants are activated.

Fig 8 is a flow diagram representation of a method 140 for reading data from a data archive. At 141, a resource identifier is received. At 142, a first entry in a second portion of the data archive is accessed based on the resource identifier. Accessing the first entry may comprise searching the second portion of the data archive for an entry matching the resource identifier. The term "first entry" as used herein may refer to any entry in the second portion of the data archive without implying any particular position of this entry in the second portion. At 143, it is determined whether the first entry includes information on a storage location in a first portion of the data archive or an identifier for another entry in the second portion of the data archive. When the first entry includes information on a storage location in the first portion of the data archive, the method proceeds to 148. At 148, the information on the storage location is retrieved from the first entry, and at 147 data corresponding to the data resource are read from the first portion of the data archive based on the information on the storage location retrieved at 148.

When the first entry includes an identifier for a second entry, the method proceeds from 143 to 144. At 144, the identifier for the second entry is retrieved from the first entry. At 145, the second entry in the second portion is accessed. Accessing the second entry at 145 may again comprise searching the second portion of the data archive for an entry matching the identifier retrieved at 144 from the first entry. At 146, information on the storage location of data corresponding to the data resource is retrieved. Depending on whether the second entry includes information on a storage location in the first portion or an identifier for yet another, third entry, the information on the storage location may be retrieved at 146 directly from the second entry or indirectly by accessing yet further entries in the second portion of the data archive. At 147, data corresponding to the data resource is read from the first portion of the data archive based on the information on the storage location retrieved at 146.

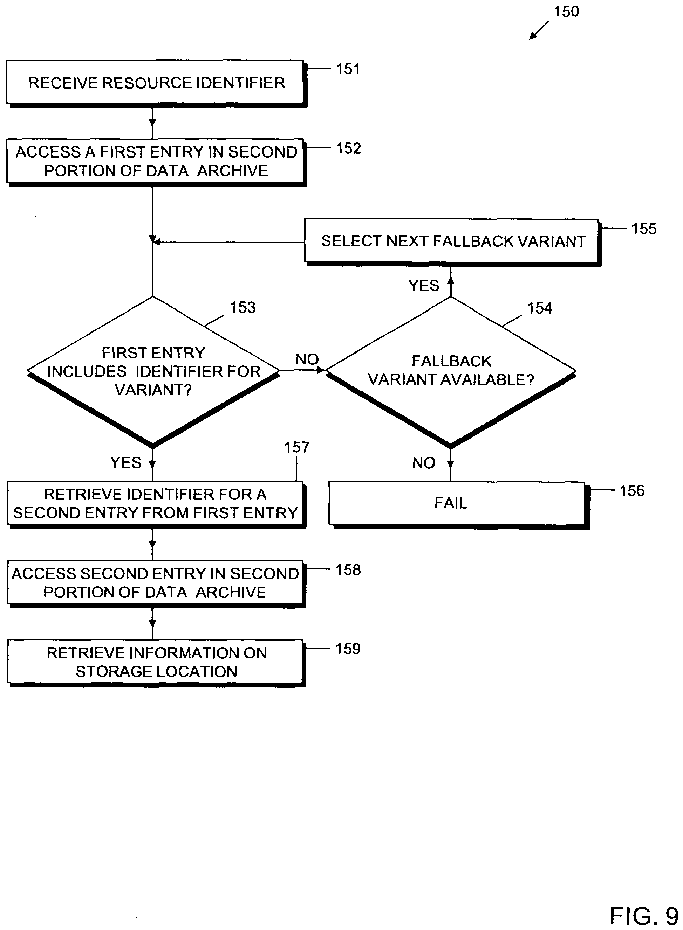

When the first entry does not include information on a storage location in the first portion of the data archive, it may comprise not only one, but a plurality of identifiers for a plurality of second entries. Then, the retrieving at 144 may comprise selecting one identifier from the plurality of identifiers. When the plurality of second entries corresponds to a plurality of variants for a given data resource, the selecting may be based on the variant that is currently active, as will be described in more detail with reference to Fig. 9.

Fig 9 is a flow diagram representation of a method 150 for reading data from a data archive. At 151 and 152, a resource identifier is received and a first entry in a second portion of the data archive is accessed based on the resource identifier. The receiving and accessing at 151 and 152 may be implemented in the manner described with reference to the receiving and accessing at 141 and 142 in the method 140 of Fig. 8. At 153, it is determined whether the first entry includes an identifier for a second entry that corresponds to a specific variant. The specific variant may correspond to a currently active variant, e.g., language setting, or a default variant. Information on the currently active variant may be provided by any software application or hardware managing different possible settings. Identifiers for second entries may be associated with different variants in any suitable way, for example by storing the identifiers for second entries in an array, different positions in the array corresponding to different variants, or by adding descriptors for the various variants to the second entries. If it is determined at 153 that the first entry includes an identifier for a second entry corresponding to the specific variant, the method proceeds to 157-159, where the retrieving the identifier for a second entry, accessing the second entry and retrieving information on a storage location may be implemented in the manner described with reference to 144-146 of the method 140 above.

If it is determined at 153 that the first entry does not include an identifier for a second entry corresponding to the specific variant, e.g., the currently active variant, the method proceeds to 154. At 154, it is determined whether fallback variants are available. For example, when the different variants correspond to different language settings and the currently active variant tested first at 153 is Chinese, fallback variants may include other languages, such as English and German, in a suitable order. The fallback variants may be determined by any suitable software or hardware, e.g., the software application that requests the data resource. The fallback variants may depend on the currently active variant, or one or several default variants may be defined that are independent of the currently active variant. If it is determined at 154 that there is still a fallback variant available, the method proceeds to 155 to select the next fallback variant, and then returns to 153 to determine whether the first entry includes an identifier for a second entry associated with the now selected fallback variant. If, at 154, it is determined that there is no fallback variant available, a fail signal may be returned at 156 and the method 150 may be terminated.

By utilizing fallback variants, data may be returned in response to a received resource identifier even when there are no data corresponding to a currently activated variant, provided that data corresponding to a possible fallback variant are included in the data archive.

While not shown in Fig. 9, the method 150 may also include a determination similar to 143 in the method 140, to determine whether the first entry has an identifier for a second entry or includes information on a storage location, in which latter case the data may be retrieved from the storage location without having to access another entry in the second portion of the data archive to determine the storage location. The information on the storage location retrieved at 159 may be used to read data from the first portion of the data archive, similarly to the reading at 147 in the method 140 of Fig. 8.

As schematically indicated in Fig. 7, not only one, but a set of data archives may be provided, and information on the storage location of the data corresponding to the data resource may be retrieved from one data archive of the set of data archives.

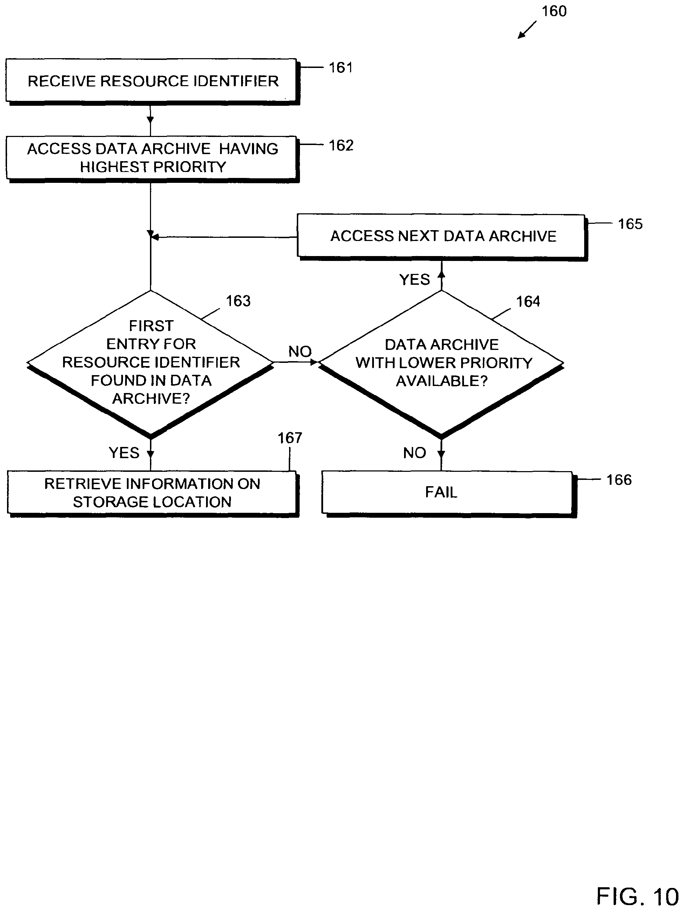

The data archives of the set of data archives may respectively have priorities associated with them, such that the data archives are accessed in succession according to their priorities, as will be explained in more detail with reference to Figs. 10-12 below. In one embodiment, when no entry matching the resource identifier is found in a second portion of a data archive of the set of data archives, the search for a matching entry may be continued in the data archive having next lower priority. Similarly, when a first entry matching the resource identifier has been found in one data archive of the set of data archives, which first entry has an identifier for a second entry, the search for the second entry may be performed not only in the one data archive including the first entry, but also in other data archives having higher or lower priority. I.e., the first entry may include an identifier for a second entry included in another data archive of the set of data archives.

Fig. 10 is a flow diagram representation of a method 160 of reading data from a data archive of a set of data archives. The method 160 may be performed by the processor 124 of the apparatus 121 of Fig. 7.

At 161, a resource identifier is received. The resource identifier may be, e.g., a numerical identifier. At 162, a data archive having highest priority of a set of data archives is accessed and a search is performed for an entry matching the resource identifier. At 163, it is determined whether the second portion of the data archive has a first entry matching the resource identifier. If a matching first entry is found in the second portion of the data archive, the method proceeds to 167. At 167, information on a storage location of data corresponding to the data resource is retrieved. The retrieving may be implemented according to any one of the methods described with reference to Figs. 8 and 9. In particular, the information on the storage location may be obtained directly from the first entry found in the second portion of the data archive, or other entries in the second portion of this data archive or in the second portions of other data archives may be accessed to retrieve the information on the storage location.

If, at 163, it is determined that the data archive does not have a first entry matching the resource identifier, the method proceeds to 164. At 164, it is determined whether a data archive having lower priority is available. If no data archive having lower priority is available, the method 160 proceeds to 166. At 166, a fail signal is returned and the method 160 is terminated. If a data archive having lower priority is available, the method proceeds to 165. At 165, the data archive having next lower priority is accessed and a search for a first entry is performed in that data archive, and the method continues at 163 by determining whether a first entry matching the resource identifier has been found in that data archive.

In this manner, data archives of a set of data archives may be successively accessed and searched for a first entry matching the resource identifier.

When plural data archives of a set of data archives are successively accessed to search for an entry matching the resource identifier, partial updates of the set of data archives are facilitated. For example, when an updated version of data stored in one data archive is available, another data archive having higher priority may be added in which the updated data are stored in the first portion and an entry associating this data with a corresponding resource identifier is stored in the second portion of the other data archive. Similarly, the other data archive having higher priority may declare data in the one data archive to be void.

Accessing data archives of a set of data archives according to their priorities may be combined with the activation of fallback variants as explained with reference to Fig. 9 above. For example, in the method 150 of Fig. 9, steps 152 and 153 may be replaced by steps 162-165 of Fig. 10, the method continuing to the fallback variant determining block 154 if it is determined at 164 that no data archive having lower priority is available. I.e., after a resource identifier has been received, a search is performed in the second portion of the data archive having highest priority, and if no match is found, the search is continued in the data archives having lower priority before a fallback variant is activated and the search is restarted with the data archive having highest priority.

Reverting to Fig. 7 for further illustration of the method of Fig. 10, it is assumed that the data archive 131 has higher priority than the data archive 134. When a resource identifier is received, a search for a matching first entry is first performed in the second portion 133 of the data archive 131, and when no matching first entry is found there, the search is continued in the second portion 136 of the data archive 134.

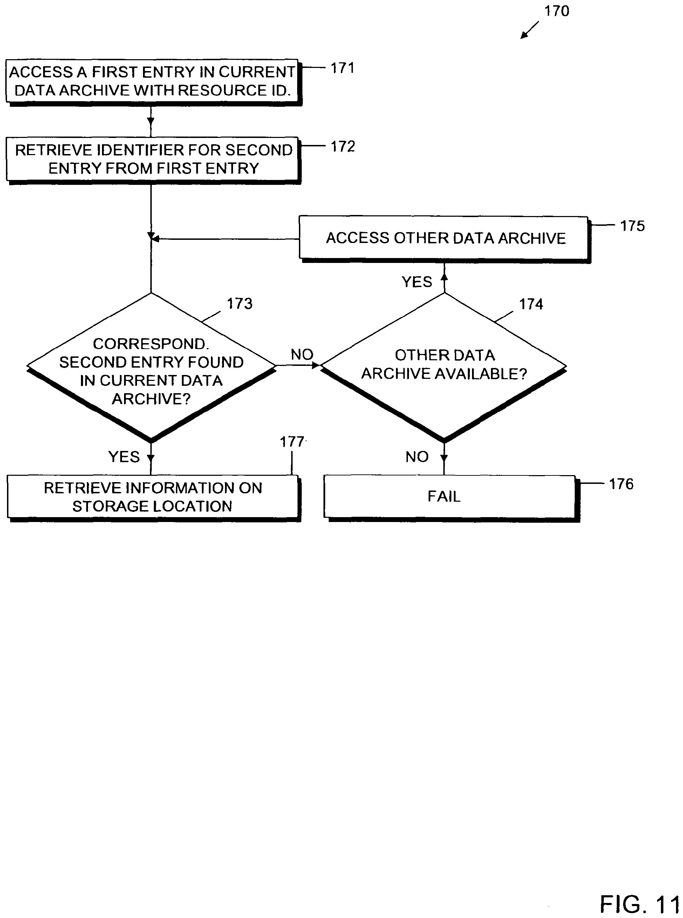

Further data archives of a set of data archives may not only be accessed to search for an entry matching the resource identifier. Rather, when a first entry has been found in one of the data archives that includes an identifier for a second entry, a search for the second entry may be performed in several data archives, as will be explained in more detail with reference to Fig. 11.

Fig. 11 is a flow diagram representation of a method 170 of reading data from a data archive of a set of data archives. The method 170 may be performed by the processor 124 of the apparatus 121 of Fig. 7.

At 171, a first entry in a data archive is accessed based on a resource identifier. The current data archive at 171 does not have to be the data archive having highest priority. Rather, the current data archive at 171 may be any data archive of the set of data archives. At 172, an identifier for a second entry is retrieved from the first entry. Then, a search for a corresponding second entry is performed in the current data archive. At 173, it is determined whether a matching second entry has been found in the current data archive. If the matching second entry has been found, the method proceeds to 177. At 177, information on a storage location of data associated with the resource identifier is retrieved, either directly from the second entry or by accessing still other entries in the second portion of the data archive.

If, at 173, it is determined that no corresponding second entry has been found in the current data archive, the method proceeds to 174. At 174, it is determined whether another data archive is available. If no other data archive in the set of data archives is available, i.e., if all data archives have already been searched, the method proceeds to 176, and a fail signal is returned. If another data archive is available, the method proceeds to 175. At 175, the other data archive is accessed and a search for a second entry matching the identifier for a second entry retrieved from the first entry is performed in the other data archive. The method then returns to the decision block 173.

In one implementation, the other data archives accessed at 174, 175 may have higher and/or lower priority than the data archive in which the first entry has been found. For example, when no entry corresponding to the second entry is found in the same data archive in which the first entry has been found, all other data archives of the set of data archives may be searched in the order of their priorities.

Reverting to Fig. 7 for further illustration of the method of Fig. 10, it is assumed that the data archive 131 has higher priority than the data archive 134. When a resource identifier is received and a matching first entry is found in the second portion 133 of the data archive 131, which includes an identifier for a second entry, the search for the second entry is first performed in the second portion 133 of the data archive 131 and, when no match is found, the search is continued in the second portion 136 of the data archive 134. When a resource identifier is received and a matching first entry is found in the second portion 136 of the data archive 134, which includes an identifier for a second entry, the search for the second entry is first performed in the second portion 136 of the data archive 134 and, when no match is found, the search is continued in the second portion 133 of the data archive 131.

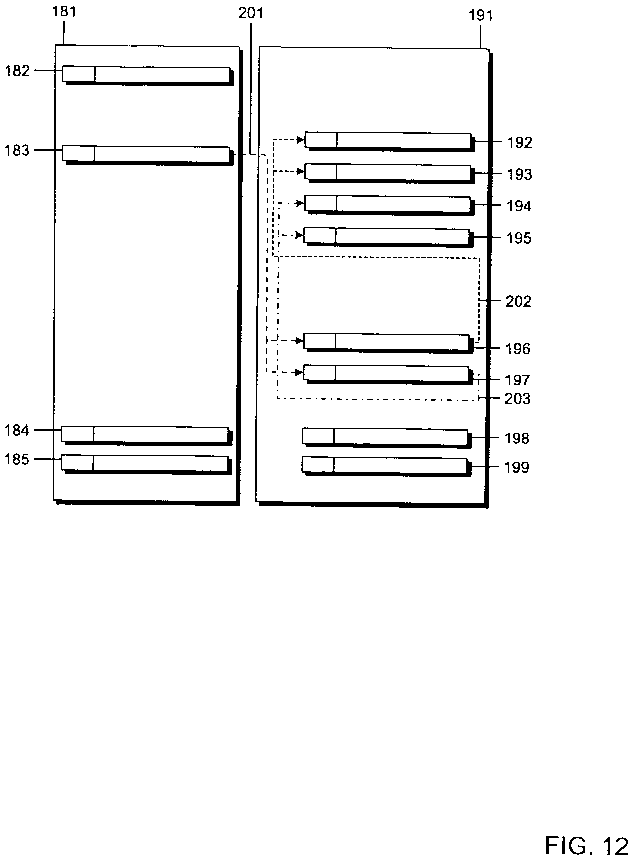

Referring to Fig. 12, the method 170 of Fig. 11 will be further illustrated. Fig. 12 is a schematic illustration of a second portion 181 of one data archive and of a second portion 191 of another data archive of a set of data archives.

Each of the data archives includes a first portion (not shown in Fig. 12). The second portion 181 of the one data archive has entries 182, 183 which are accessed to determine a storage location of data and respectively have an identifier section and a section comprising one of information on a storage location in the first portion of the one data archive or an identifier for another entry in one of second portions 181, 191. The second portion 181 further has stored therein information 184, 185 on data structures of the data stored in the first portion of the one data archive. Similarly, the second portion 191 of the other data archive has entries 192-197 which are accessed to determine a storage location of data and respectively have an identifier section and a section comprising one of information on a storage location in the first portion of the other data archive or an identifier for another entry in the second portion 191. The second portion 191 further has stored therein information 198, 199 on data structures of the data stored in the first portion of the other data archive.

For illustration only, it is assumed that the entry 183 in the second portion 181 of the one data archive comprises identifiers matching the entries 196, 197 in the second portion 191 of the other data archive, the different identifiers corresponding to a plurality of variants for a data resource, e.g., different daytime settings, and that the entry 196 comprises identifiers matching the entries 192, 193 and the entry 197 comprises identifiers for the entries 194, 195, respectively, corresponding to an additional plurality of variants for a data resource, e.g., different language settings.

When the resource identifier corresponding to the entry 183 is received, the entry 183 is accessed and, depending on an active variant or possible fallback variants, the identifier for one of the entries 196, 197 is retrieved. In order to read the data from the set of data archives, one of the entries 196, 197 is accessed, as schematically indicated by arrow lines 201. Depending on an active variant or possible fallback variants, an identifier for one of the entries 192-195 is retrieved from the accessed entry 196 197 and the corresponding entry 192-195 is accessed, as schematically indicated by arrow lines 202, 203. From the entry 192-195, information on the storage location of the data is then retrieved.

The second portions 181, 191 in Fig. 12 are only illustrative. For example, in other implementations, the entries 192-195 could also be stored in the second portion 181 of the one data archive rather than the second portion 191 of the other data archive. I.e., the entries 196, 197 could refer the resource request back to the second portion 181 of the one data archive. In other implementations, the entries 192-195 could be stored in the second portion (not shown) of a third data archive, etc.

In any one of the methods explained with reference to Figs. 8-12 above, reading of data from the first portion of a data archive may be based both on the information on the storage location retrieved from an entry in the second portion of the data archive and on information on a data structure that is also included in the second portion of the data archive.

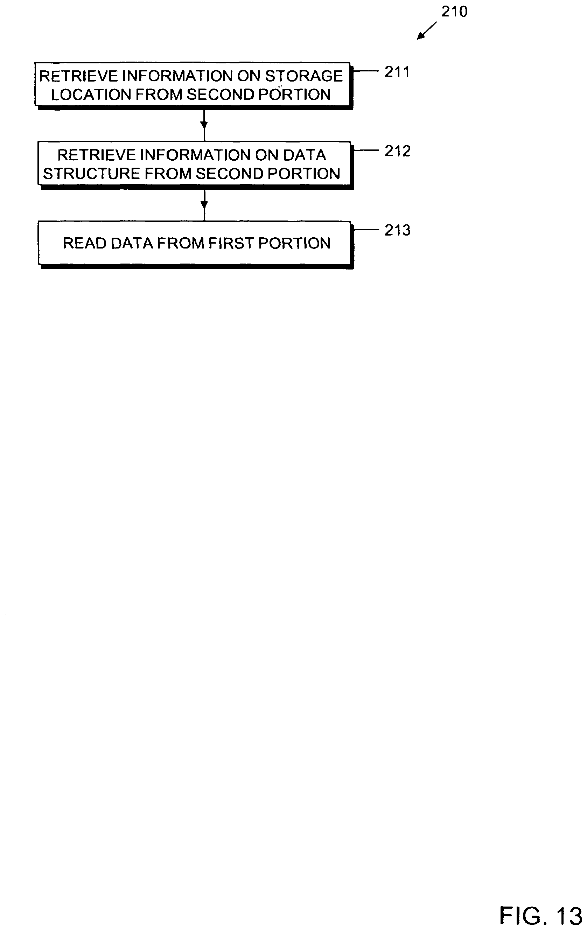

Fig. 13 is a flow diagram representation of a method 210 of reading data from a data archive. The method 210 may be performed by the processor 124 of the apparatus 121 of Fig. 7.

At 211, information on a storage location is retrieved from the second portion of the data archive based on a resource identifier. Retrieving the information on the storage location at 211 may be implemented according to any one of the methods described with reference to Figs. 8-12 above. At 212, information on a data structure of the data is retrieved from the second portion of the data archive. At 213, the data are read from the first portion based on the information on the storage location of 211 and the information on the data structure of 212.

Retrieving the information on the data structure at 212 may be based on information on a data type included in a first and/or second entry of the second portion of the data archive. For example, one of the entries accessed to determine the storage location may also specify the data type of the data, such as graphics, text string, audio data or similar, and the information on the data structure is then retrieved based on the data type.

Reverting to Fig. 2 for further illustration of the method 210, the data 26 and 27 may be text strings, and one of entry 35 or entries 33, 34 that are accessed to retrieve information on the storage location may specify that the data type of the data 26, 27 is "text string". When entry 37 includes a definition of the data structure for the data type "text string", this entry 37 will be accessed and the definition of the data structure will be utilized to read the data from the first portion 22 of the data archive 21.

Based on the information on the data structure, a specific datum may be retrieved from the data stored in the first portion of the data archive. For example, when image data are stored in a data format in which a number of integers indicating an image height, width, color coding scheme and run length encoding information are stored at the beginning of the data, this basic data structure may be stored in the second portion of the data archive and may be utilized when a specific datum, e.g., the color coding scheme, is required for a given application.

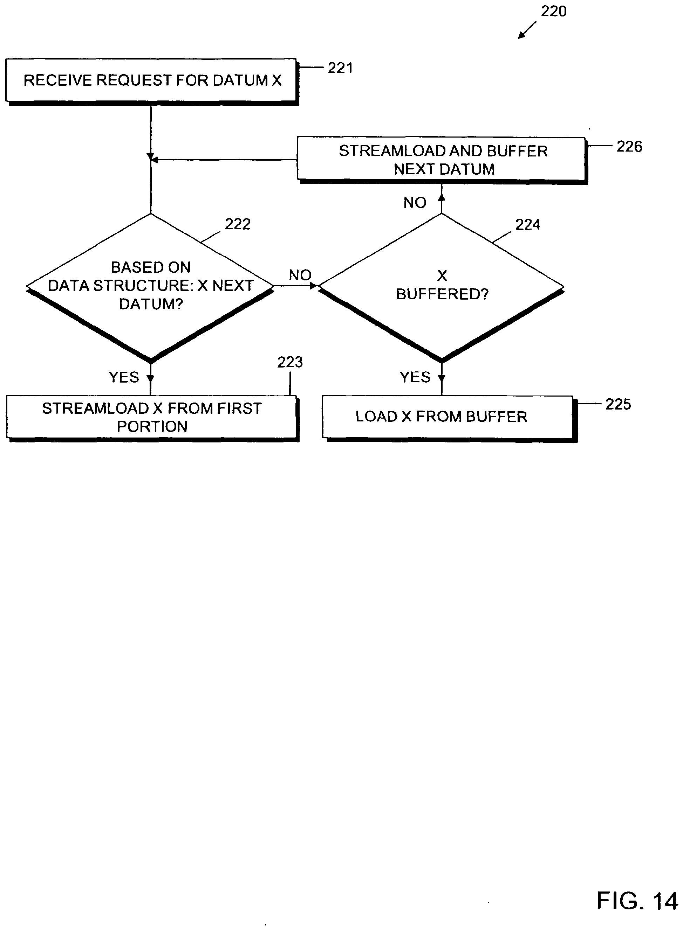

Fig. 14 is a flow diagram representation of a method 220 of reading data from a data archive. The method 220 may be performed by the processor 124 of the apparatus 121 of Fig. 7, e.g., when executing the reading of data at 213 in the method 210 of Fig. 13. In the method 220, it is assumed that data are sequentially read from the first portion of the data archive and are buffered, or added to a data map.

At 221, a request for a datum X is received. The specific datum may, for example, correspond to an image height, width or color coding scheme. At 222, it is determined based on the information on the data structure in the second portion of the data archive whether X is the next datum, i.e., the datum following the datum that has been read from the first portion last. For example, when the information on the data structure indicates that image data include, in this order, integers indicating the image height, width, and color coding scheme, and the image height has been read last, decision block 222 will yield yes when X is the image width. When X is the next datum, the method proceeds to 223. At 223, the next datum is streamloaded. The datum X may then be provided to the application from which the request for the datum X has been received.

If, at 222, it is determined that X is not the next datum, the method proceeds to 224. At 224, it is determined whether the datum X has already been read and buffered. If it is determined that X has already been buffered, the method proceeds to 225. At 225, X is loaded from the buffer and may be provided to the application from which the request for the datum X has been received. If, at 224, it is determined that X has not yet been buffered, the method proceeds to 226, where the next datum is streamloaded and buffered. The method then returns to 222.

When data is read based on the information on the data structure stored in the second portion of the data archive, the data archive may be utilized to provide data to applications even when the order in which data are required by the application is not known in advance. For example, when image data include, in this order, the image height, width and color coding scheme, while an application requests the image color coding scheme before the image height and width, the correct datum may still be identified based on the information on the data structure stored in the second portion of the data archive.

Various modifications of the methods and devices illustrated in the drawings and described herein may be implemented in other embodiments. For example, while illustrative implementations of data archives and of entries in second portions of data archives have been described for some embodiments, the specific configuration of the data archives may be adapted as appropriate. While in some illustrative embodiments described above, one, two or three entries in the second portion(s) of a data archive or a set of data archives are accessed to retrieve information on a storage location, the number of entries successively accessed to retrieve this information may also be higher. Further, the hierarchy of entries through which a resource request is passed may depend on the specific data resource. While some textual data resources, for example text strings such as "start", "stop", or "okay", may not need to be provided in different variants, other textual data resources may have to be provided in different language variants and/or different daytime variants. While sets of data archives having two data archives have been illustrated in some embodiments, the number of data archives in the set of data archives is not limited to two, but more or less data archives may be provided. While second portions of data archives have been illustrated in some embodiments which include entries accessed to retrieve information on a storage location and, in addition, information on a data structure of data stored in the first portion of the respective data archive, the second portion of the data archive may also include additional information as appropriate, such as priority information or data archive version information.

While it is expected that embodiments of the invention may be advantageously utilized in human-machine interfaces, e.g., in a navigation device, the invention is not limited to this specific field of application. For example, embodiments of the invention may also be utilized for data archives of a personal computer or of a mobile electronic device, where a plurality of different variants for a particular data resource may correspond to different desktop layouts or different country settings.

## Claims

1. Method of writing data into a data archive, comprising
storing said data (24-27) in a first portion (12, 15; 22; 132, 135) of said data archive (11, 14; 21; 131, 134),
generating an entry (31-34; 62-67; 192-195) in a second portion (13, 16; 23; 61; 133, 136; 181, 191) of said data archive (11, 14; 21; 131, 134), said entry (31-34; 62-67; 192-195) comprising an identifier for said data and being indicative of a storage location of said data (24-27) in said first portion (12, 15; 22; 132, 135), and
determining whether said data (26, 27) correspond to one of a plurality of variants for a given data resource,
**characterized by**
when said data (26, 27) are determined to correspond to one of said plurality of variants for said given data resource
generating a further entry (35; 69, 70; 196, 197) in said second portion (13, 16; 23; 61; 133, 136; 181, 191), said further entry (35; 69, 70; 196, 197) comprising an identifier for said given data resource and an identifier for said entry (33, 34; 64-67; 192-195),
wherein, said steps of storing data and generating an entry are performed for a plurality of data (26, 27) corresponding to said plurality of variants, thereby generating a plurality of entries (33, 34; 64-67; 192-195) in said second portion (23), and
wherein said further entry (35; 69, 70; 196, 197) is generated so as to comprise the identifier for each one of said plurality of entries (33, 34; 64-67; 192-195).

2. The method according to claim 1, comprising
storing, in said second portion (13, 16; 23; 61; 133, 136; 181, 191), information (37, 38; 80, 81; 184, 185, 198, 199) on a data structure of said data (24-27) stored in said first portion (12, 15; 22; 132, 135).

3. The method according to any one of the preceding claims, comprising compressing said data (24-27) prior to storing said data (24-27) in said first portion (12, 15; 22; 132, 135).

4. The method according to any one of the preceding claims, comprising establishing whether other data corresponding to one of said plurality of variants for said given data resource is included in another data archive (14; 134), and
storing, in said second portion (13; 23; 61; 133; 181, 191), priority information indicative of a priority of said data archive (11; 131) based on said establishing.

5. The method according to any one of the preceding claims,
wherein said plurality of variants for said data resource corresponds to at least one of different language settings, different daytime settings, or different data output settings for said given data resource, in particular for a navigation device (120) onboard a vehicle.

6. Data processing apparatus, comprising
an interface (2) to receive data (8; 24-27) to be written into a data archive (11, 14; 21; 131, 134),
a storage device (3) having a first portion (12, 15; 22; 132, 135) and a second portion (13, 16; 23; 61; 133, 136; 181, 191), and
a processor (4) coupled to said interface (2) and said storage device (3), wherein said processor (4) is operable to receive said data (8; 24-27) from said interface (2), to store said data (8; 24-27) in said first portion (12, 15; 22; 132, 135), and to generate, in said second portion, an entry comprising an identifier for said data and being indicative of a storage location of said data in said first portion, **characterized in**
**that** when said data correspond to one of a plurality of variants for a given data resource, said processor (4) is further operable to generate, in said second portion (13, 16; 23; 61; 133, 136; 181, 191), a further entry (35; 69, 70; 196, 197) comprising an identifier for said given data resource and an identifier for said entry (33, 34; 64-67; 192-195)that said processor (4) is operable to store in said first portion (12, 15; 22; 132, 135) a plurality of data (26, 27) corresponding to said plurality of variants for said given data resource when said data (26, 27) correspond to one of said plurality of variants for said given data resource, and to respectively generate an entry (33, 34; 64-67; 192-195) in said second portion (23), thereby generating a plurality of entries (33, 34; 64-67; 192-195) in said second portion (23), and that said processor is operable to generate said further entry (35; 69, 70; 196, 197) so as to comprise the identifier for each one of said plurality of entries (33, 34; 64-67; 192-195).

7. The apparatus according to claim 6, comprising
an input device (5) coupled to said processor (4) to receive a user input indicative of whether said data (8; 24-27) correspond to one of said plurality of variants for said given data resource.

8. The apparatus according to claim 6 or 7,
wherein said processor (4) is configured to perform the method according to any one of claims 1-5.

9. Data storage medium, having stored therein instructions which, when executed by a processor (4) of a computing device (1), direct the processor (4) to perform the method according to any one claims 1-5.

10. Method of reading data from a data archive, comprising
receiving an identifier for a data resource to be retrieved from said data archive (21; 131, 134), said data archive (21; 131, 134) comprising a first portion (22; 132, 135) and a second portion (23; 61; 133; 181, 191), accessing a first entry (31, 32, 35, 36; 62, 63, 68; 182, 183, 196, 197) in said second portion (23; 61; 133; 181, 191) of said data archive (21; 131, 134) based on said identifier to retrieve from said first entry (31, 32, 35, 36; 62, 63, 68; 182, 183, 196, 197) one of information on a storage location of data (24-27) corresponding to said data resource in said first portion (22; 132, 135) or an identifier for a second entry (33, 34; 64-67, 69, 70; 192-195) in said second portion (23; 61; 133; 181, 191),
**characterized by**
when said identifier for said second entry (33, 34; 64-67, 69, 70; 192-195) is retrieved from said first entry (35; 68; 183, 196, 197), accessing said second entry (33, 34; 64-67, 69, 70; 192-195) to retrieve information on said storage location of said data (26, 27), and
reading said data (24-27) from said first portion (22; 132, 135) based on said information on said storage location,
wherein, when data (26, 27) corresponding to a plurality of variants for said data resource are stored in said data archive (21; 131, 134), said first entry (35; 68; 183, 196, 197) comprises an identifier for said data resource and a plurality of identifiers for a plurality of second entries (33, 34; 64-67, 69, 70; 192-195) in said second portion, each of said plurality of second entries corresponding to one of the plurality of variants for said data resource, the plurality of identifiers comprising said identifier for said second entry (33, 34; 64-67, 69, 70; 192-195).

11. The method according to claim 10, comprising
selecting said identifier for said second entry (33, 34; 64-67, 69, 70; 192-195) from said plurality of identifiers based on an active variant for said data resource.

12. The method according to claim 10 or 11, comprising
selecting a fallback variant for said data resource, and
selecting said identifier for said second entry (33, 34; 64-67, 69, 70; 192-195) based on said fallback variant when said first entry (35; 68; 183, 196, 197) does not comprise an identifier for a second entry (33, 34; 64-67, 69, 70; 192-195) corresponding to said active variant.

13. The method according to any one of claims 10-12,
wherein said plurality of variants for said data resource corresponds to at least one of different language settings, different daytime settings, or different data output settings for said given data resource, in particular for a navigation device (120) onboard a vehicle.

14. The method according to any one of claims 10-13, comprising
accessing a further data archive (134) using one of said resource identifier or said identifier for said second entry (33, 34; 64-67, 69, 70) to retrieve information on said storage location of said data (24-27) from said further data archive (134) when said data archive (131) does not have a first entry (31, 32, 35, 36; 62, 63, 68; 182, 183, 196, 197) corresponding to said resource identifier or a second entry (33, 34; 64-67, 69, 70) corresponding to said identifier for said second entry (33, 34; 64-67, 69, 70).

15. The method according to any one of claims 10-14, comprising
retrieving, from said second portion (23; 61; 133, 136; 181, 191), information (37, 38; 80, 81; 184, 185, 198, 199) on a data structure of said data, wherein said reading said data (24-27) is based on said information (37, 38; 80, 81; 184, 185, 198, 199) on said data structure.

16. The method according to claim 15, comprising
decompressing said data (24-27) based on said information (37, 38; 80, 81; 184, 185, 198, 199) on said data structure.

17. Data processing apparatus, comprising
a storage device (123) having a first portion (22; 132, 135) and a second portion (23; 61; 133; 181, 191), and
a processor (124) coupled to said storage device (123) to retrieve a data resource from said storage device (123) based on an identifier for said data resource,
said processor (124) being operable to access a first entry (31-36; 62-70; 182, 183, 192-197) in said second portion (23; 61; 133; 181, 191) based on said identifier to retrieve from said first entry (31-36; 62-70; 182, 183, 192-197) one of information on a storage location of data (24-27) corresponding to said data resource in said first portion (22; 132, 135) or an identifier for a second entry (33, 34; 64-67, 69, 70; 192-195) in said second portion (23; 61; 133; 181, 191),
**characterized in**
**that**, when data (26, 27) corresponding to a plurality of variants for said data resource are stored in said data archive (21; 131, 134), said first entry (35; 68; 183, 196, 197) comprises an identifier for said data resource and a plurality of identifiers for a plurality of second entries (33, 34; 64-67, 69, 70; 192-195) in said second portion, each of said plurality of second entries corresponding to one of the plurality of variants for said data resource, the plurality of identifiers comprising said identifier for said second entry (33, 34; 64-67, 69, 70; 192-195), and
**that** said processor (124) is further operable to access, when said identifier for said second entry (33, 34; 64-67, 69, 70; 192-195) is retrieved from said first entry (35; 68; 183, 196, 197), said second entry (33, 34; 64-67, 69, 70; 192-195) in said second portion (23; 61; 133; 181, 191) to retrieve information on the storage location of the data (26, 27) corresponding to said second entry in said first portion,
wherein said processor (123) is operable to read said data (24-27) from said first portion (22; 132, 135) based on said information on said storage location.

18. The data processing apparatus according to claim 17,
wherein said processor (124) is operable to perform the method according to any one of claims 10-16.

19. A navigation device, comprising
the data processing apparatus (121) according to claim 17 or 18, and
an output device (122) coupled to said processor (124) and operable to output said data (24-27) read from said first portion (22; 132, 135).

## Patentansprüche

1. Verfahren zum Schreiben von Daten in ein Datenarchiv, umfassend Speichern der Daten (24-27) in einem ersten Teil (12, 15; 22; 132, 135) des Datenarchivs (11, 14; 21; 131, 134),
Erzeugen eines Eintrags (31-34; 62-67; 192-195) in einem zweiten Teil (13, 16; 23; 61; 133, 136; 181, 191) des Datenarchivs (11, 14; 21; 131, 134), wobei der Eintrag (31-34; 62-67; 192-195) eine Kennung für die Daten umfasst und auf einen Speicherort der Daten (24-27) in dem ersten Teil (12, 15; 22; 132, 135) hinweist, und Bestimmen, ob die Daten (26, 27) einer aus einer Vielzahl von Varianten für eine gegebene Datenressource entsprechen,
**gekennzeichnet durch**
wenn bestimmt wird, dass die Daten (26, 27) einer aus der Vielzahl von Varianten für die gegebene Datenressource entsprechen
Erzeugen eines weiteren Eintrags (35; 69, 70; 196, 197) in dem zweiten Teil (13, 16; 23; 61; 133, 136; 181, 191), wobei der weitere Eintrag (35; 69, 70; 196, 197) eine Kennung für die gegebene Datenressource und eine Kennung für den Eintrag (33, 34; 64-67; 192-195) umfasst,
wobei die Schritte des Speicherns von Daten und Erzeugens eines Eintrags für eine Vielzahl von Daten (26, 27), die der Vielzahl von Varianten entspricht, durchgeführt werden, wodurch eine Vielzahl von Einträgen (33, 34; 64-67; 192-195) in dem zweiten Teil (23) erzeugt wird, und
wobei der weitere Eintrag (35; 69, 70; 196, 197) erzeugt wird, sodass er die Kennung für jeden aus der Vielzahl von Einträgen (33, 34; 64-67; 192-195) umfasst.

2. Verfahren nach Anspruch 1, umfassend
Speichern von Informationen (37, 38; 80, 81; 184, 185, 198, 199) über eine Datenstruktur der Daten (24-27), die in dem ersten Teil (12, 15; 22; 132, 135) gespeichert sind, in dem zweiten Teil (13, 16; 23; 61; 133, 136; 181, 191).

3. Verfahren nach einem der vorhergehenden Ansprüche, umfassend
Komprimieren der Daten (24-27) vor dem Speichern der Daten (24-27) in dem ersten Teil (12, 15; 22; 132, 135).

4. Verfahren nach einem der vorhergehenden Ansprüche, umfassend
Feststellen, ob andere Daten, die einer aus der Vielzahl von Varianten für die gegebene Datenressource entsprechen, in einem anderen Datenarchiv (14; 134) enthalten sind, und
Speichern von Prioritätsinformationen, die auf eine Priorität des Datenarchivs (11; 131) hinweisen, in dem zweiten Teil (13; 23; 61; 133; 181, 191) auf Grundlage des Feststellens.

5. Verfahren nach einem der vorhergehenden Ansprüche,
wobei die Vielzahl von Varianten für die Datenressource zumindest einem von unterschiedlichen Spracheinstellungen, unterschiedlichen Tageszeiteinstellungen oder unterschiedlichen Datenausgabeeinstellungen für die gegebene Datenressource, insbesondere für eine Navigationsvorrichtung (120) an Bord eines Fahrzeugs, entspricht.

6. Datenverarbeitungsvorrichtung, umfassend
eine Schnittstelle (2) zum Empfangen von Daten (8; 24-27), die in ein Datenarchiv (11, 14; 21; 131, 134) geschrieben werden sollen,
eine Speichervorrichtung (3), die einen ersten Teil (12, 15; 22; 132, 135) und einen zweiten Teil (13, 16; 23; 61; 133, 136; 181, 191) aufweist, und
einen Prozessor (4), der an die Schnittstelle (2) und die Speichervorrichtung (3) gekoppelt ist,
wobei der Prozessor (4) bedienbar ist, um die Daten (8; 24-27) von der Schnittstelle (2) zu empfangen, um die Daten (8; 24-27) in dem ersten Teil (12, 15; 22; 132, 135) zu speichern und um in dem zweiten Teil einen Eintrag zu erzeugen, der eine Kennung für die Daten umfasst und auf einen Speicherort der Daten in dem ersten Teil hinweist,
**dadurch gekennzeichnet,**
**dass**, wenn die Daten einer aus einer Vielzahl von Varianten für eine gegebene Datenressource entsprechen, der Prozessor (4) ferner bedienbar ist, um in dem zweiten Teil (13, 16; 23; 61; 133, 136; 181, 191) einen weiteren Eintrag (35; 69, 70; 196, 197) zu erzeugen, der eine Kennung für die gegebene Datenressource und eine Kennung für den Eintrag (33, 34; 64-67; 192-195) umfasst, dass der Prozessor (4) bedienbar ist, um in dem ersten Teil (12, 15; 22; 132; 135) eine Vielzahl von Daten (26, 27) zu speichern, die der Vielzahl von Varianten für die gegebene Datenressource entspricht, wenn die Daten (26, 27) einer aus der Vielzahl von Varianten für die gegebene Datenressource entsprechen, und um jeweils einen Eintrag (33, 34; 64-67; 192-195) in dem zweiten Teil (23) zu erzeugen, wodurch eine Vielzahl von Einträgen (33, 34; 64-67; 192-195) in dem zweiten Teil (23) erzeugt wird, und
**dass** der Prozessor bedienbar ist, um den weiteren Eintrag (35; 69, 70; 196, 197) zu erzeugen, sodass er die Kennung für jeden aus der Vielzahl von Einträgen (33, 34; 64-67; 192-195) umfasst.

7. Vorrichtung nach Anspruch 6, umfassend
eine Eingabevorrichtung (5), die an den Prozessor (4) gekoppelt ist, um eine Benutzereingabe zu empfangen, die darauf hinweist, ob die Daten (8; 24-27) einer aus der Vielzahl von Varianten für die gegebene Datenressource entsprechen.

8. Vorrichtung nach Anspruch 6 oder 7,
wobei der Prozessor (4) konfiguriert ist, um das Verfahren nach einem der Ansprüche 1-5 durchzuführen.

9. Datenspeichermedium, auf dem Anweisungen gespeichert sind, die, wenn sie durch einen Prozessor (4) einer Rechenvorrichtung (1) ausgeführt werden, den Prozessor (4) anleiten, das Verfahren nach einem der Ansprüche 1-5 durchzuführen.

10. Verfahren zum Lesen von Daten aus einem Datenarchiv, umfassend
Empfangen einer Kennung für eine Datenressource, die aus dem Datenarchiv (21; 131, 134) abgerufen werden soll, wobei das Datenarchiv (21; 131, 134) einen ersten Teil (22; 132, 135) und einen zweiten Teil (23; 61; 133; 181, 191) umfasst, Zugreifen auf einen ersten Eintrag (31, 32, 35, 36; 62, 63, 68; 182, 183, 196, 197) in dem zweiten Teil (23; 61; 133; 181, 191) des Datenarchivs (21; 131, 134) auf Grundlage der Kennung, um aus dem ersten Eintrag (31, 32, 35, 36; 62, 63, 68; 182, 183, 196, 197) eines von Informationen über einen Speicherort von Daten (24-27), die der Datenressource in dem ersten Teil (22; 132, 135) entsprechen, oder einer Kennung für einen zweiten Eintrag (33, 34; 64-67, 69, 70; 192-195) in dem zweiten Teil (23; 61; 133; 181, 191) abzurufen,
**gekennzeichnet durch**
wenn die Kennung für den zweiten Eintrag (33, 34; 64-67, 69, 70; 192-195) aus dem ersten Eintrag (35; 68; 183, 196, 197) abgerufen wird, Zugreifen auf den zweiten Eintrag (33, 34; 64-67, 69, 70; 192-195) zum Abrufen von Informationen über den Speicherort der Daten (26, 27), und
Lesen der Daten (24-27) aus dem ersten Teil (22; 132, 135) auf Grundlage der Informationen über den Speicherort,
wobei, wenn Daten (26, 27), die einer Vielzahl von Varianten für die Datenressource entsprechen, in dem Datenarchiv (21; 131, 134) gespeichert sind, der erste Eintrag (35; 68; 183, 196, 197) eine Kennung für die Datenressource und eine Vielzahl von Kennungen für eine Vielzahl von zweiten Einträgen (33, 34; 64-67, 69, 70; 192-195) in dem zweiten Teil umfasst, wobei jeder aus der Vielzahl von zweiten Einträgen einer aus der Vielzahl von Varianten für die Datenressource entspricht, wobei die Vielzahl von Kennungen die Kennung für den zweiten Eintrag (33, 34; 64-67, 69, 70; 192-195) umfasst.

11. Verfahren nach Anspruch 10, umfassend
Auswählen der Kennung für den zweiten Eintrag (33, 34; 64-67, 69, 70; 192-195) aus der Vielzahl von Kennungen auf Grundlage einer aktiven Variante für die Datenressource.

12. Verfahren nach Anspruch 10 oder 11, umfassend
Auswählen einer Rückfallvariante für die Datenressource, und
Auswählen der Kennung für den zweiten Eintrag (33, 34; 64-67, 69, 70; 192-195) auf Grundlage der Rückfallvariante, wenn der erste Eintrag (35; 68; 183, 196, 197) keine Kennung für einen zweiten Eintrag (33, 34; 64-67, 69, 70; 192-195) umfasst, der der aktiven Variante entspricht.

13. Verfahren nach einem der Ansprüche 10-12,
wobei die Vielzahl von Varianten für die Datenressource zumindest einem von unterschiedlichen Spracheinstellungen, unterschiedlichen Tageszeiteinstellungen oder unterschiedlichen Datenausgabeeinstellungen für die gegebene Datenressource, insbesondere für eine Navigationsvorrichtung (120) an Bord eines Fahrzeugs, entspricht.

14. Verfahren nach einem der Ansprüche 10-13, umfassend
Zugreifen auf ein weiteres Datenarchiv (134) unter Verwendung von einer von der Ressourcenkennung oder der Kennung für den zweiten Eintrag (33, 34; 64-67, 69, 70), um Informationen über den Speicherort der Daten (24-27) aus dem weiteren Datenarchiv (134) abzurufen, wenn das Datenarchiv (131) keinen ersten Eintrag (31, 32, 35, 36; 62, 63, 68; 182, 183, 196, 197) aufweist, der der Ressourcenkennung entspricht, oder keinen zweiten Eintrag (33, 34; 64-67, 69, 70) aufweist, der der Kennung für den zweiten Eintrag (33, 34; 64-67, 69, 70) entspricht.

15. Verfahren nach einem der Ansprüche 10-14, umfassend
Abrufen von Informationen (37, 38; 80, 81; 184, 185, 198, 199) über eine Datenstruktur der Daten aus dem zweiten Teil (23; 61; 133, 136; 181, 191), wobei das Lesen der Daten (24-27) auf den Informationen (37, 38; 80, 81; 184, 185, 198, 199) über die Datenstruktur basiert.

16. Verfahren nach Anspruch 15, umfassend
Dekomprimieren der Daten (24-27) auf Grundlage der Informationen (37, 38; 80, 81; 184, 185, 198, 199) über die Datenstruktur.

17. Datenverarbeitungsvorrichtung, umfassend
eine Speichervorrichtung (123), die einen ersten Teil (22; 132, 135) und einen zweiten Teil (23; 61; 133; 181, 191) aufweist, und
einen Prozessor (124), der an die Speichervorrichtung (123) gekoppelt ist, um eine Datenressource aus der Speichervorrichtung (123) auf Grundlage einer Kennung für die Datenressource abzurufen,
wobei der Prozessor (124) bedienbar ist, um auf einen ersten Eintrag (31-36; 62-70; 182, 183, 192-197) in dem zweiten Teil (23; 61; 133; 181, 191) auf Grundlage der Kennung zuzugreifen, um aus dem ersten Eintrag (31-36; 62-70; 182, 183, 192-197) eines von Informationen über einen Speicherort von Daten (24-27), die der Datenressource in dem ersten Teil (22; 132, 135) entsprechen, oder einer Kennung für einen zweiten Eintrag (33, 34; 64-67, 69, 70; 192-195) in dem zweiten Teil (23; 61; 133; 181, 191) abzurufen,
**dadurch gekennzeichnet**
**dass**, wenn Daten (26, 27), die einer Vielzahl von Varianten für die Datenressource entsprechen, in dem Datenarchiv (21; 131, 134) gespeichert sind, der erste Eintrag (35; 68; 183, 196, 197) eine Kennung für die Datenressource und eine Vielzahl von Kennungen für eine Vielzahl von zweiten Einträgen (33, 34; 64-67, 69, 70; 192-195) in dem zweiten Teil umfasst, wobei jeder aus der Vielzahl von zweiten Einträgen einer aus der Vielzahl von Varianten für die Datenressource entspricht, wobei die Vielzahl von Kennungen die Kennung für den zweiten Eintrag (33, 34; 64-67, 69, 70; 192-195) umfasst, und
**dass** der Prozessor (124) ferner bedienbar ist, um, wenn die Kennung für den zweiten Eintrag (33, 34; 64-67, 69, 70; 192-195) aus dem ersten Eintrag (35; 68; 183, 196, 197) abgerufen wird, auf den zweiten Eintrag (33, 34; 64-67, 69, 70; 192-195) in dem zweiten Teil (23; 61; 133; 181, 191) zuzugreifen, um Informationen über den Speicherort der Daten (26, 27), die dem zweiten Eintrag in dem ersten Teil entsprechen, abzurufen,
wobei der Prozessor (123) bedienbar ist, um die Daten (24-27) aus dem ersten Teil (22; 132, 135) auf Grundlage der Informationen über den Speicherort zu lesen.

18. Datenverarbeitungsvorrichtung nach Anspruch 17,
wobei der Prozessor (124) bedienbar ist, um das Verfahren nach einem der Ansprüche 10-16 durchzuführen.

19. Navigationsvorrichtung, umfassend
die Datenverarbeitungsvorrichtung (121) nach Anspruch 17 oder 18, und
eine Ausgabevorrichtung (122), die an den Prozessor (124) gekoppelt und bedienbar ist, um die aus dem ersten Teil (22; 132, 135) gelesenen Daten (24-27) auszugeben.

## Revendications

1. Procédé d'écriture de données dans une archive de données, comprenant le stockage desdites données (24-27) dans une premier partie (12, 15 ; 22 ; 132, 135) de ladite archive de données (11, 14 ; 21 ; 131, 134),
la génération d'une entrée (31-34 ; 62-67 ; 192-195) dans une seconde partie (13, 16 ; 23 ; 61 ; 133, 136 ; 181, 191) de ladite archive de données (11, 14 ; 21 ; 131, 134), ladite entrée (31-34; 62-67; 192-195) comprenant un identifiant pour lesdites données et indiquant un emplacement de stockage desdites données (24-27) dans ladite première partie (12, 15 ; 22 ; 132, 135), et
le fait de déterminer si lesdites données (26, 27) correspondent à une d'une pluralité de variantes pour une ressource de données précise,
**caractérisé par**
lorsqu'il est déterminé que lesdites données (26, 27) correspondent à une de ladite pluralité de variantes pour ladite ressource de données précise la génération d'une entrée supplémentaire (35 ; 69, 70 ; 196, 197) dans ladite seconde partie (13, 16 ; 23 ; 61 ; 133, 136 ; 181, 191), ladite entrée supplémentaire (35 ; 69, 70 ; 196, 197) comprenant un identifiant pour ladite ressource de données précise et un identifiant pour ladite entrée (33, 34 ; 64-67 ; 192-195),
dans lequel lesdites étapes de stockage de données et de génération d'une entrée sont réalisées pour une pluralité de données (26, 27) correspondant à ladite pluralité de variantes, générant de cette façon une pluralité d'entrées (33, 34 ; 64-67 ; 192-195) dans ladite seconde partie (23), et
dans lequel ladite entrée supplémentaire (35 ; 69, 70 ; 196, 197) est générée de sorte à comprendre l'identifiant pour chacune de ladite pluralité d'entrées (33, 34 ; 64-67 ; 192-195).

2. Procédé selon la revendication 1, comprenant
le stockage, dans ladite seconde partie (13, 16; 23 ; 61 ; 133, 136; 181, 191), d'informations (37, 38 ; 80, 81 ; 184, 185, 198, 199) sur une structure de données desdites données (24-27) stockées dans ladite première partie (12, 15 ; 22 ; 132, 135).

3. Procédé selon l'une quelconque des revendications précédentes, comprenant la compression desdites données (24-27) avant le stockage desdites données (24-27) dans ladite première partie (12, 15 ; 22 ; 132, 135).

4. Procédé selon l'une quelconque des revendications précédentes, comprenant le fait d'établir si d'autres données, correspondant à une de ladite pluralité de variantes pour ladite ressource de données précise, sont incluses dans une autre archive de données (14 ; 134), et
le stockage, dans ladite seconde partie (13 ; 23 ; 61 ; 133 ; 181, 191), d'informations de priorité indiquant une priorité de ladite archive de données (11 ; 131) sur la base dudit établissement.

5. Procédé selon l'une quelconque des revendications précédentes,
dans lequel ladite pluralité de variantes pour ladite ressource de données correspond à au moins un de différents réglages de langue, de différents réglages d'heure du jour ou de différents réglages de sortie de données pour ladite ressource de données précise, en particulier pour un dispositif de navigation (120) à bord d'un véhicule.

6. Appareil de traitement de données, comprenant
une interface (2) pour recevoir des données (8 ; 24-27) à écrire dans une archive de données (11, 14 ; 21 ; 131, 134),
un dispositif de stockage (3) ayant une première partie (12, 15 ; 22 ; 132, 135) et une seconde partie (13, 16 ; 23 ; 61 ; 133, 136 ; 181, 191), et
un processeur (4) couplé à ladite interface (2) et audit dispositif de stockage (3), dans lequel ledit processeur (4) est utilisable pour recevoir lesdites données (8 ; 24-27) depuis ladite interface (2), pour stocker lesdites données (8 ; 24-27) dans ladite première partie (12, 15 ; 22 ; 132, 135), et pour générer, dans ladite seconde partie, une entrée comprenant un identifiant pour lesdites données et indiquant un emplacement de stockage desdites données dans ladite première partie, **caractérisé en ce que**, lorsque lesdites données correspondent à une d'une pluralité de variantes pour une ressource de données précise, ledit processeur (4) est en outre utilisable pour générer, dans ladite seconde partie (13, 16 ; 23 ; 61 ; 133, 136 ; 181, 191), une entrée supplémentaire (35 ; 69, 70 ; 196, 197) comprenant un identifiant pour ladite ressource de données précise et un identifiant pour ladite entrée (33, 34 ; 64-67 ; 192-195)
**en ce que** ledit processeur (4) est utilisable pour stocker dans ladite première partie (12, 15 ; 22 ; 132, 135) une pluralité de données (26, 27) correspondant à ladite pluralité de variantes pour ladite ressource de données précise lorsque lesdites données (26, 27) correspondent à une de ladite pluralité de variantes pour ladite ressource de données précise, et pour générer respectivement une entrée (33, 34 ; 64-67 ; 192-195) dans ladite seconde partie (23), générant de cette façon une pluralité d'entrées (33, 34 ; 64-67 ; 192-195) dans ladite seconde partie (23), et
**en ce que** ledit processeur est utilisable pour générer ladite entrée supplémentaire (35 ; 69, 70 ; 196, 197) afin de comprendre l'identifiant pour chacune de ladite pluralité d'entrées (33, 34 ; 64-67 ; 192-195).

7. Appareil selon la revendication 6, comprenant
un dispositif d'entrée (5) couplé audit processeur (4) pour recevoir une entrée d'utilisateur indiquant si lesdites données (8 ; 24-27) correspondent à une de ladite pluralité de variantes pour ladite ressource de données précise.

8. Appareil selon la revendication 6 ou 7,
dans lequel ledit processeur (4) est configuré pour réaliser le procédé selon l'une quelconque des revendications 1 à 5.

9. Support de stockage de données, sur lequel sont stockées des instructions qui, lorsqu'elles sont exécutées par un processeur (4) d'un dispositif informatique (1), amènent le processeur (4) à réaliser le procédé selon l'une quelconque des revendications 1 à 5.

10. Procédé de lecture de données depuis une archive de données, comprenant la réception d'un identifiant pour une ressource de données à récupérer depuis ladite archive de données (21 ; 131, 134), ladite archive de données (21 ; 131, 134) comprenant une première partie (22 ; 132, 135) et une seconde partie (23 ; 61 ; 133 ; 181, 191),
l'accès à une première entrée (31, 32, 35, 36 ; 62, 63, 68 ; 182, 183, 196, 197) dans ladite seconde partie (23 ; 61 ; 133 ; 181, 191) de ladite archive de données (21 ; 131, 134) sur la base dudit identifiant pour récupérer depuis ladite première entrée (31, 32, 35, 36 ; 62, 63, 68 ; 182, 183, 196, 197) soit des informations sur un emplacement de stockage de données (24-27) correspondant à ladite ressource de données dans ladite première partie (22 ; 132, 135) soit un identifiant pour une seconde entrée (33, 34 ; 64-67, 69, 70 ; 192-195) dans ladite seconde partie (23 ; 61 ; 133 ; 181, 191),
**caractérisé par**
lorsque ledit identifiant pour ladite seconde entrée (33, 34 ; 64-67, 69, 70 ; 192-195) est récupéré depuis ladite première entrée (35 ; 68 ; 183, 196, 197), l'accès à ladite seconde entrée (33, 34 ; 64-67, 69, 70 ; 192-195) pour récupérer des informations sur ledit emplacement de stockage desdites données (26, 27), et
la lecture desdites données (24-27) depuis ladite première partie (22 ; 132, 135) sur la base desdites informations sur ledit emplacement de stockage,
dans lequel, lorsque des données (26, 27) correspondant à une pluralité de variantes pour ladite ressource de données sont stockées dans ladite archive de données (21 ; 131, 134), ladite première entrée (35 ; 68 ; 183, 196, 197) comprend un identifiant pour ladite ressource de données et une pluralité d'identifiants pour une pluralité de secondes entrées (33, 34; 64-67, 69, 70; 192-195) dans ladite seconde partie, chacune de ladite pluralité de secondes entrées correspondant à une de la pluralité de variantes pour ladite ressource de données, la pluralité d'identifiants comprenant ledit identifiant pour ladite seconde entrée (33, 34 ; 64-67, 69, 70 ; 192-195).

11. Procédé selon la revendication 10, comprenant
la sélection dudit identifiant pour ladite seconde entrée (33, 34 ; 64-67, 69, 70 ; 192-195) depuis ladite pluralité d'identifiants sur la base d'une variante active pour ladite ressource de données.

12. Procédé selon la revendication 10 ou 11, comprenant
la sélection d'une variante de secours pour ladite ressource de données, et
la sélection dudit identifiant pour ladite seconde entrée (33, 34 ; 64-67, 69, 70 ; 192-195) sur la base de ladite variante de secours lorsque ladite première entrée (35 ; 68 ; 183, 196, 197) ne comprend pas un identifiant pour une seconde entrée (33, 34 ; 64-67, 69, 70 ; 192-195) correspondant à ladite variante active.

13. Procédé selon l'une quelconque des revendications 10 à 12,
dans lequel ladite pluralité de variantes pour ladite ressource de données correspond à au moins un de différents réglages de langue, de différents réglages d'heure du jour ou de différents réglages de sortie de données pour ladite ressource de données précise, en particulier pour un dispositif de navigation (120) à bord d'un véhicule.

14. Procédé selon l'une quelconque des revendications 10 à 13, comprenant
l'accès à une archive de données supplémentaire (134) à l'aide d'un dudit identifiant de ressource ou dudit identifiant pour ladite seconde entrée (33, 34 ; 64-67, 69, 70) pour récupérer des informations sur ledit emplacement de stockage desdites données (24-27) depuis ladite archive de données supplémentaire (134) lorsque ladite archive de données (131) n'a pas de première entrée (31, 32, 35, 36 ; 62, 63, 68 ; 182, 183, 196, 197) correspondant audit identifiant de ressource ou de seconde entrée (33, 34 ; 64-67, 69, 70) correspondant audit identifiant pour ladite seconde entrée (33, 34 ; 64-67, 69, 70).

15. Procédé selon l'une quelconque des revendications 10 à 14, comprenant la récupération, depuis ladite seconde partie (23 ; 61 ; 133, 136 ; 181, 191), d'informations (37, 38 ; 80, 81 ; 184, 185, 198, 199) sur une structure de données desdites données, dans lequel ladite lecture desdites données (24-27) est basée sur lesdites informations (37, 38 ; 80, 81 ; 184, 185, 198, 199) sur ladite structure de données.

16. Procédé selon la revendication 15, comprenant
la décompression desdites données (24-27) sur la base desdites informations (37, 38 ; 80, 81 ; 184, 185, 198, 199) sur ladite structure de données.

17. Appareil de traitement de données, comprenant
un dispositif de stockage (123) ayant une première partie (22 ; 132, 135) et une seconde partie (23 ; 61 ; 133 ; 181, 191), et
un processeur (124) couplé audit dispositif de stockage (123) pour récupérer une ressource de données depuis ledit dispositif de stockage (123) basé sur un identifiant pour ladite ressource de données,
ledit processeur (124) étant utilisable pour accéder à une première entrée (31-36 ; 62-70 ; 182, 183, 192-197) dans ladite seconde partie (23 ; 61 ; 133 ; 181, 191) sur la base dudit identifiant pour récupérer depuis ladite première entrée (31-36 ; 62-70 ; 182, 183, 192-197) soit des informations sur un emplacement de stockage de données (24-27) correspondant à ladite ressource de données dans ladite première partie (22 ; 132, 135) soit un identifiant pour une seconde entrée (33, 34 ; 64-67, 69, 70 ; 192-195) dans ladite seconde partie (23 ; 61 ; 133 ; 181, 191),
**caractérisé en**
**ce que**, lorsque des données (26, 27) correspondant à une pluralité de variantes pour ladite ressource de données sont stockées dans ladite archive de données (21 ; 131, 134), ladite première entrée (35 ; 68 ; 183, 196, 197) comprend un identifiant pour ladite ressource de données et une pluralité d'identifiants pour une pluralité de secondes entrées (33, 34 ; 64-67, 69, 70 ; 192-195) dans ladite seconde partie, chacune de ladite pluralité de secondes entrées correspondant à une de la pluralité de variantes pour ladite ressource de données, de la pluralité d'identifiants comprenant ledit identifiant pour ladite seconde entrée (33, 34 ; 64-67, 69, 70 ; 192-195), et
**en ce que** ledit processeur (124) est en outre utilisable pour accéder, lorsque ledit identifiant pour ladite seconde entrée (33, 34 ; 64-67, 69, 70 ; 192-195) est récupéré depuis ladite première entrée (35 ; 68 ; 183, 196, 197), à ladite seconde entrée (33, 34 ; 64-67, 69, 70 ; 192-195) dans ladite seconde partie (23 ; 61 ; 133 ; 181, 191) pour récupérer des informations sur l'emplacement de stockage des données (26, 27) correspondant à ladite seconde entrée dans ladite première partie,
dans lequel ledit processeur (123) est utilisable pour lire lesdites données (24-27) depuis ladite première partie (22 ; 132, 135) sur la base desdites informations sur ledit emplacement de stockage.

18. Appareil de traitement de données selon la revendication 17, dans lequel ledit processeur (124) est utilisable pour réaliser le procédé selon l'une quelconque des revendications 10 à 16.

19. Dispositif de navigation, comprenant
l'appareil de traitement de données (121) selon la revendication 17 ou 18, et
un dispositif de sortie (122) couplé audit processeur (124) et utilisable pour délivrer en sortie lesdites données (24-27) lues depuis ladite première partie (22 ; 132, 135).
